(19) Europäisches Patentamt
European Patent Office
Office européen des brevets

(11) **EP 3 644 733 B1**

(12) # EUROPEAN PATENT SPECIFICATION

(45) Date of publication and mention of the grant of the patent:
**24.03.2021 Bulletin 2021/12**

(21) Application number: **18732392.8**

(22) Date of filing: **27.06.2018**

(51) Int Cl.:
***A01N 35/02*** $^{(2006.01)}$ ***A01P 1/00*** $^{(2006.01)}$
***A01P 3/00*** $^{(2006.01)}$ ***A01N 37/06*** $^{(2006.01)}$
***A01N 37/10*** $^{(2006.01)}$ ***A01N 37/28*** $^{(2006.01)}$
***A01N 37/40*** $^{(2006.01)}$ ***A01N 43/16*** $^{(2006.01)}$

(86) International application number:
**PCT/EP2018/067297**

(87) International publication number:
**WO 2019/002391 (03.01.2019 Gazette 2019/01)**

(54) **ANTIMICROBIAL MIXTURE CONTAINING 4-(3-ETHOXY-4-HYDROXYPHENYL)BUTAN-2-ONE AND AN ORGANIC ACID COMPOUND, AND COSMETIC COMPOSITION CONTAINING SAME**

ANTIMIKROBIELLES GEMISCH ENTHALTEND 4-(3-ETHOXY-4-HYDROXYPHENYL)BUTAN-2-ON UND EINE ORGANISCHE SÄURE, SOWIE KOSMETISCHE ZUSAMMENSETZUNGEN, DIE DIESES ENTHÄLT

MELANGE ANTIMICROBIEN CONTENANT DU 4-(3-ETHOXY-4-HYDROXYPHENYL)BUTAN-2-ONE ET UN ACIDE ORGANIQUE, ET COMPOSITION COSMETIQUE LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**30.06.2017 FR 1756168**
**30.06.2017 FR 1756172**
**30.06.2017 FR 1756157**
**30.06.2017 FR 1756160**
**30.06.2017 FR 1756162**
**10.11.2017 FR 1760573**

(43) Date of publication of application:
**06.05.2020 Bulletin 2020/19**

(73) Proprietor: **L'Oreal**
**75008 Paris (FR)**

(72) Inventors:
- **MENARD-SZCZEBARA, Florence**
**94152 Chevilly La Rue (FR)**
- **CUPFERMAN, Sylvie**
**94152 Chevilly La Rue (FR)**
- **GALVAN, Julien**
**94152 Chevilly La Rue (FR)**

(74) Representative: **Rivière, François Armand**
**L'Oréal**
**Service DIPI**
**9 Rue Pierre Dreyfus**
**92110 Clichy (FR)**

(56) References cited:
**EP-A1- 0 940 145** **WO-A1-02/069710**
**WO-A1-2009/070736** **WO-A1-2012/131266**
**WO-A1-2015/051116** **WO-A2-2011/039444**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The subject of the present invention is an antibacterial mixture containing 4-(3-ethoxy-4-hydroxyphenyl)butan-2-one and a particular organic acid compound, and also a cosmetic composition containing such a mixture.

4-(3-Ethoxy-4-hydroxyphenyl)butan-2-one (ketone compound) is an interesting substance as a preserving agent for cosmetic compositions, for protecting the compositions against microbial contamination, as described in the application WO 2011/039445.

However, it is desirable to be able to incorporate said ketone compound in reduced concentration in compositions, especially cosmetic or dermatological compositions, while at the same time maintaining good antimicrobial conservation performance. Combinations of the ketone compound with other compounds that have an antimicrobial efficacy are thus sought for this purpose.

The inventors have discovered, unexpectedly, that the combination of 4-(3-ethoxy-4-hydroxyphenyl)butan-2-one with an organic acid compound chosen from a benzoic acid salt, such as sodium benzoate, sorbic acid or a salt thereof, methyl 4-hydroxybenzoate, propyl 4-hydroxybenzoate, 5-n-octanoylsalicylic acid, a hydroxamic acid, dehydroacetic acid or a salt thereof, as defined below, makes it possible to obtain an antimicrobial mixture which has synergistic antimicrobial activity.

The results of the examples described below show the synergistic antimicrobial activity obtained with the minimum inhibitory concentration (MIC) measurements taken with several mixtures. The antimicrobial activity is considered as being synergistic when the antimicrobial mixture makes it possible to obtain a percentage of strain growth of less than or equal to 20%, or even less than or equal to 25%.

The combination of 4-(3-ethoxy-4-hydroxyphenyl)butan-2-one with a benzoic acid salt such as sodium benzoate makes it possible to obtain an antimicrobial mixture which has synergistic antimicrobial activity, in particular on yeasts, in particular on *Candida albicans,* on gram-negative bacteria, in particular on *Pseudomonas aeruginosa,* and on gram-positive bacteria, in particular on *Staphylococcus aureus.*

The combination of 4-(3-ethoxy-4-hydroxyphenyl)butan-2-one with sorbic acid or a salt thereof makes it possible to obtain an antimicrobial mixture which has synergistic antimicrobial activity, in particular on moulds, in particular on *Aspergillus niger,* and on gram-positive bacteria, in particular on *Enterococcus faecalis.* Furthermore, the mixture with sorbic acid also has synergistic antimicrobial activity on yeasts, in particular on *Candida albicans,* and on the gram-positive bacterium *Staphylococcus aureus.*

The combination of 4-(3-ethoxy-4-hydroxyphenyl)butan-2-one with methyl 4-hydroxybenzoate or propyl 4-hydroxybenzoate makes it possible to obtain an antimicrobial mixture which has synergistic antimicrobial activity, in particular on yeasts, in particular on *Candida albicans,* and on gram-negative bacteria, in particular on *Pseudomonas aeruginosa.* Furthermore, the mixture with methyl 4-hydroxybenzoate also has synergistic antimicrobial activity on gram-positive bacteria, in particular on *Staphylococcus aureus* and on *Enterococcus faecalis.* This result is surprising since, on the one hand, the mixture of 4-(3-ethoxy-4-hydroxyphenyl)butan-2-one with ethyl 4-hydroxybenzoate and, on the other hand, the mixture of 4-(3-ethoxy-4-hydroxyphenyl)butan-2-one with butyl 4-hydroxybenzoate have no synergistic antimicrobial activity.

The combination of 4-(3-ethoxy-4-hydroxyphenyl)butan-2-one with 5-n-octanoylsalicylic acid makes it possible to obtain an antimicrobial mixture which has synergistic antimicrobial activity, in particular on moulds, in particular on *Aspergillus niger,* and on gram-positive bacteria, in particular on *Enterococcus faecalis.* Furthermore, the mixture with 5-n-octanoylsalicylic acid also has synergistic antimicrobial activity on yeasts, in particular on *Candida albicans,* and on the gram-positive bacterium *Staphylococcus aureus.*

The combination of 4-(3-ethoxy-4-hydroxyphenyl)butan-2-one with a hydroxamic acid as defined below, in particular caprylhydroxamic acid, makes it possible to obtain an antimicrobial mixture with synergistic antimicrobial activity, in particular on moulds, especially on *Aspergillus niger.*

The combination of 4-(3-ethoxy-4-hydroxyphenyl)butan-2-one with dehydroacetic acid or a salt thereof, in particular sodium dehydroacetate, makes it possible to obtain an antimicrobial mixture which has synergistic antimicrobial activity, in particular on moulds, in particular on *Aspergillus niger,* and on yeasts, in particular on *Candida albicans.*

More precisely, a subject of the invention is an antimicrobial mixture comprising, or constituted of, 4-(3-ethoxy-4-hydroxyphenyl)butan-2-one and an organic acid compound chosen from:

i) a benzoic acid salt;
ii) sorbic acid or a salt thereof;
iii) methyl 4-hydroxybenzoate or propyl 4-hydroxybenzoate;
iv) 5-n-octanoylsalicylic acid;
v) a hydroxamic acid or a salt thereof, of formula (I):

$$R\text{-}C(=O)\text{-}NH\text{-}OH \qquad (I)$$

in which R represents a linear or branched, saturated or unsaturated $C_5$ to $C_{11}$ alkyl radical;
vi) dehydroacetic acid or a salt thereof.

The term "organic acid compound" is intended to mean the compounds mentioned previously which may be a carboxylic acid, a carboxylic acid salt or a carboxylic acid ester.

A subject of the invention is also a composition, in particular a cosmetic or dermatological composition, comprising, in a physiologically acceptable medium, said mixture described previously.

A further subject of the invention is a process for the non-therapeutic cosmetic treatment of keratin materials, comprising the application to the keratin materials of a composition as described previously. The process may be a cosmetic process for caring for or making up or cleansing keratin materials.

A subject of the invention is also a process for conserving a composition comprising a physiologically acceptable medium, in particular a cosmetic or dermatological composition, characterized in that it consists in incorporating into said composition an antimicrobial mixture as described previously.

A subject of the invention is also the use of the antimicrobial mixture described previously for conserving a composition comprising a physiologically acceptable medium.

4-(3-Ethoxy-4-hydroxyphenyl)butan-2-one is a compound of formula

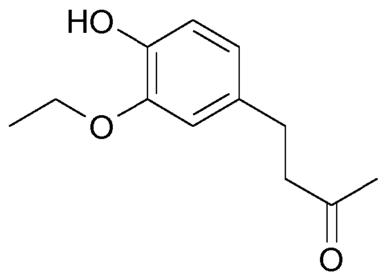

According to a first embodiment, a subject of the invention is an antimicrobial mixture comprising, or constituted of, 4-(3-ethoxy-4-hydroxyphenyl)butan-2-one and a benzoic acid salt.

The benzoic acid salt may be chosen from alkali metal (sodium, potassium) salts, alkaline-earth metal (calcium, magnesium) salts or monoethanolamine or ammonium salts. Preferably, it is the sodium salt: sodium benzoate.

Advantageously, 4-(3-ethoxy-4-hydroxyphenyl)butan-2-one and the benzoic acid salt are present in said mixture in a content such that the 4-(3-ethoxy-4-hydroxyphenyl)butan-2-one/benzoic acid salt weight ratio ranges from 0.1 to 3, preferably ranges from 0.1 to 1.5, preferentially ranging from 0.2 to 1.5 and more preferentially ranging from 0.2 to 1.2.

The antimicrobial mixture may have a 4-(3-ethoxy-4-hydroxyphenyl)butan-2-one/benzoic acid salt weight ratio ranging from 0.2 to 3, preferably ranging from 0.2 to 2.2 and preferentially ranging from 0.2 to 1.5. Such a mixture has good antimicrobial activity on the gram-positive bacterium *Staphylococcus aureus.*

The antimicrobial mixture may have a 4-(3-ethoxy-4-hydroxyphenyl)butan-2-one/benzoic acid salt weight ratio ranging from 0.2 to 1.5, preferably ranging from 0.2 to 0.7. Such a mixture has good antimicrobial activity on yeasts, in particular on *Candida albicans.*

The antimicrobial mixture may have a 4-(3-ethoxy-4-hydroxyphenyl)butan-2-one/benzoic acid salt weight ratio ranging from 0.1 to 1.5, preferably ranging from 0.1 to 1.1. Such a mixture has good antimicrobial activity on gram-negative bacteria, in particular on *Pseudomonas aeruginosa.*

According to a second embodiment, a subject of the invention is an antimicrobial mixture comprising, or constituted of, 4-(3-ethoxy-4-hydroxyphenyl)butan-2-one and sorbic acid or a salt thereof.

Sorbic acid corresponds to the compound hexa-2,4-dienoic acid (CAS No.: 110-44-1) of formula $CH_3$-CH=CH-CH=CH-COOH.

The sorbic acid salts may be chosen from alkali metal (sodium, potassium) salts, alkaline-earth metal (calcium, magnesium) salts or triethanolamine salts. Preferably, it is the potassium salt: potassium sorbate.

Advantageously, 4-(3-ethoxy-4-hydroxyphenyl)butan-2-one and sorbic acid or a salt thereof are present in said mixture in a content such that the weight ratio of 4-(3-ethoxy-4-hydroxyphenyl)butan-2-one/sorbacid or a salt thereof ranges from 0.1 to 2.5, preferably ranging from 0.1 to 1.5, preferentially ranging from 0.2 to 1.5 and more preferentially ranging from 0.2 to 1.2.

The antimicrobial mixture according to the invention has synergistic antimicrobial activity, in particular on moulds, especially on *Aspergillus niger,* and on gram-positive bacteria, in particular on *Enterococcus faecalis.* Furthermore, the mixture with sorbic acid also has synergistic antimicrobial activity on yeasts, in particular on *Candida albicans,* and on the gram-positive bacterium *Staphylococcus aureus.*

According to a first variant of implementation of the invention, the antimicrobial mixture comprises sorbic acid.

The antimicrobial mixture may have a 4-(3-ethoxy-4-hydroxyphenyl)butan-2-one/sorbic acid weight ratio ranging from 0.1 to 1.5, and preferably ranging from 0.2 to 1.2. Such a mixture has good antimicrobial activity on the gram-positive bacterium *Staphylococcus aureus.*

The antimicrobial mixture may have a 4-(3-ethoxy-4-hydroxyphenyl)butan-2-one/sorbic acid weight ratio ranging from 0.1 to 1.5, preferably ranging from 0.4 to 1.2. Such a mixture has good antimicrobial activity on yeasts, in particular on *Candida albicans.*

The antimicrobial mixture may have a 4-(3-ethoxy-4-hydroxyphenyl)butan-2-one/sorbic acid weight ratio ranging from 0.1 to 0.8, preferably ranging from 0.2 to 0.6. Such a mixture has good antimicrobial activity on moulds, especially on *Aspergillus niger.*

The antimicrobial mixture may have a 4-(3-ethoxy-4-hydroxyphenyl)butan-2-one/sorbic acid weight ratio ranging from 0.15 to 0.4, preferably ranging from 0.2 to 0.3. Such a mixture has good antimicrobial activity on the gram-positive bacterium *Enterococcus faecalis.*

According to a second variant of implementation of the invention, the antimicrobial mixture comprises potassium sorbate.

The antimicrobial mixture may have a 4-(3-ethoxy-4-hydroxyphenyl)butan-2-one/potassium sorbate weight ratio ranging from 0.1 to 1.5, preferably from 0.1 to 1.2. Such a mixture has good antimicrobial activity on the gram-positive bacterium *Enterococcus faecalis.*

The antimicrobial mixture may have a 4-(3-ethoxy-4-hydroxyphenyl)butan-2-one/potassium sorbate weight ratio ranging from 0.3 to 2.5, preferably ranging from 0.3 to 1.5. Such a mixture has good antimicrobial activity on moulds, especially on *Aspergillus niger.*

According to a third embodiment, a subject of the invention is an antimicrobial mixture comprising, or constituted of, 4-(3-ethoxy-4-hydroxyphenyl)butan-2-one and a 4-hydroxybenzoic acid ester chosen from methyl 4-hydroxybenzoate and propyl 4-hydroxybenzoate.

The 4-hydroxybenzoic acid ester, subsequently referred to as "ester compound", is chosen from methyl 4-hydroxybenzoate and propyl 4-hydroxybenzoate.

Advantageously, 4-(3-ethoxy-4-hydroxyphenyl)butan-2-one and the ester compound are present in said mixture in a content such that the 4-(3-ethoxy-4-hydroxyphenyl)butan-2-one/ester compound weight ratio ranges from 0.3 to 5, preferably ranges from 0.4 to 4.5.

The antimicrobial mixture according to the invention has synergistic antimicrobial activity, in particular on yeasts, in particular on *Candida albicans,* and on gram-negative bacteria, in particular on *Pseudomonas aeruginosa.* Furthermore, the mixture with methyl 4-hydroxybenzoate also has synergistic antimicrobial activity on gram-positive bacteria, in particular on *Staphylococcus aureus* and on *Enterococcus faecalis.*

According to a first variant of implementation of the invention, the antimicrobial mixture comprises methyl 4-hydroxybenzoate.

The antimicrobial mixture may have a 4-(3-ethoxy-4-hydroxyphenyl)butan-2-one/methyl 4-hydroxybenzoate weight ratio ranging from 0.1 to 1.5, preferably ranging from 0.2 to 1.5 and preferentially ranging from 0.4 to 1.2. Such a mixture has good antimicrobial activity on yeasts, in particular on *Candida albicans.*

The antimicrobial mixture may have a 4-(3-ethoxy-4-hydroxyphenyl)butan-2-one/methyl 4-hydroxybenzoate weight ratio ranging from 0.4 to 3, preferably ranging from 0.4 to 2.2. Such a mixture has good antimicrobial activity on gram-negative bacteria, especially on *Pseudomonas aeruginosa.*

The antimicrobial mixture may have a 4-(3-ethoxy-4-hydroxyphenyl)butan-2-one/methyl 4-hydroxybenzoate weight ratio ranging from 0.1 to 0.8, preferably ranging from 0.1 to 0.6. Such a mixture has good antimicrobial activity on the gram-positive bacterium *Staphylococcus aureus.*

The antimicrobial mixture may have a 4-(3-ethoxy-4-hydroxyphenyl)butan-2-one/methyl 4-hydroxybenzoate weight ratio ranging from 0.1 to 1.5. Such a mixture has good antimicrobial activity on the gram-positive bacterium *Enterococcus faecalis.*

According to a second variant of implementation of the invention, the antimicrobial mixture comprises propyl 4-hydroxybenzoate.

The antimicrobial mixture may have a 4-(3-ethoxy-4-hydroxyphenyl)butan-2-one/propyl 4-hydroxybenzoate weight ratio ranging from 0.3 to 1.5, preferably ranging from 0.4 to 1.2. Such a mixture has good antimicrobial activity on yeasts, in particular on *Candida albicans.*

The antimicrobial mixture may have a 4-(3-ethoxy-4-hydroxyphenyl)butan-2-one/propyl 4-hydroxybenzoate weight ratio ranging from 0.7 to 5, preferably from 0.8 to 4.5. Such a mixture has good antimicrobial activity on gram-negative bacteria, especially on *Pseudomonas aeruginosa.*

According to a fourth embodiment, a subject of the invention is an antimicrobial mixture comprising, or constituted of, 4-(3-ethoxy-4-hydroxyphenyl)butan-2-one and 5-n-octanoylsalicylic acid.

5-n-Octanoylsalicylic acid is also called capryloylsalicylic acid. It corresponds to the compound CAS No.

78418-01-6.

Advantageously, 4-(3-ethoxy-4-hydroxyphenyl)butan-2-one and 5-n-octanoylsalicylic acid or a salt thereof are present in said mixture in a content such that the 4-(3-ethoxy-4-hydroxyphenyl)butan-2-one/5-n-octanoylsalicylic acid weight ratio ranges from 0.5 to 60, preferably from 0.5 to 50, preferentially ranging from 0.5 to 45.

The antimicrobial mixture according to the invention has synergistic antimicrobial activity, in particular on moulds, especially on *Aspergillus niger,* on yeasts, in particular on *Candida albicans,* and on gram-positive bacteria, in particular on *Enterococcus faecalis.*

The antimicrobial mixture may have a 4-(3-ethoxy-4-hydroxyphenyl)butan-2-one/5-n-octanoylsalicylic acid weight ratio ranging from 3 to 12, preferably ranging from 3 to 10. Such a mixture has synergistic antimicrobial activity on moulds, especially on *Aspergillus niger.*

The antimicrobial mixture may have a 4-(3-ethoxy-4-hydroxyphenyl)butan-2-one/5-n-octanoylsalicylic acid weight ratio ranging from 0.5 to 12, preferably ranging from 0.5 to 10. Such a mixture has synergistic antimicrobial activity on yeasts, especially on *Candida albicans.*

The antimicrobial mixture may have a 4-(3-ethoxy-4-hydroxyphenyl)butan-2-one/5-n-octanoylsalicylic acid weight ratio ranging from 7 to 60, preferably ranging from 8 to 50 and preferentially ranging from 9 to 45. Such a mixture has synergistic antimicrobial activity on the gram-positive bacterium *Enterococcus faecalis.*

According to a fifth embodiment, a subject of the invention is an antimicrobial mixture comprising, or constituted of, 4-(3-ethoxy-4-hydroxyphenyl)butan-2-one and a hydroxamic acid, or a salt thereof, of formula (I):

R-C(=O)-NH-OH (I)

in which R represents a linear or branched, saturated or unsaturated $C_5$ to $C_{11}$ alkyl radical.

The hydroxamic acids under consideration according to the invention are compounds of general formula (I):

R-C(=O)-NH-OH (I)

in which:

R represents a linear or branched, saturated or unsaturated $C_5$-$C_{11}$ alkyl radical.

These compounds may be obtained via any method known to those skilled in the art, for example according to the preparation processes described in document WO 2009/070736.

According to one embodiment, the hydroxamic acids according to the invention are more particularly chosen from caprohydroxamic acid, caprylhydroxamic acid, caprihydroxamic acid and laurylhydroxamic acid, or mixtures thereof.

The salts of the hydroxamic acids of formula (I) may be chosen from alkali metal or alkaline-earth metal salts such as sodium, potassium, calcium or magnesium salts, or ammonium salts.

According to one preferred embodiment, the hydroxamic acid used in a composition in accordance with the invention is caprylhydroxamic acid.

Advantageously, 4-(3-ethoxy-4-hydroxyphenyl)butan-2-one and the hydroxamic acid (I) may be present in said mixture in contents such that the 4-(3-ethoxy-4-hydroxyphenyl)butan-2-one/hydroxamic acid (I) (preferably caprylhydroxamic acid) weight ratio ranges from 4 to 150, preferably from 30 to 130, preferentially from 45 to 130, more preferentially ranges from from 60 to 130, in particular ranges from 90 to to 130, and in particular ranges from 95 to 120.

Advantageously, the antimicrobial mixture comprises 1,3-propanediol, in particular according to a 1,3-propanediol/hydroxamic acid (I) weight ratio ranging from 5 to 20, preferably ranging from 8 to 17, and better still ranging from 10 to 15.

The antimicrobial mixture according to the invention has synergistic antimicrobial activity, in particular on moulds, especially on *Aspergillus niger.*

Preferentially, the antimicrobial mixture according to the invention contains caprylhydroxamic acid.

According to one preferred embodiment, the antimicrobial mixture contains hydroxamic acid and 1,3-propanediol. Preferably, such a mixture has a 1,3-propanediol / caprylhydroxamic acid weight ratio ranging from 5 to 20, preferably ranging from 8 to 17, and better still ranging from 10 to 15.

According to a sixth embodiment, a subject of the invention is an antimicrobial mixture comprising, or constituted of, 4-(3-ethoxy-4-hydroxyphenyl)butan-2-one and dehydroacetic acid or a salt thereof.

Dehydroacetic acid corresponds to the compound:

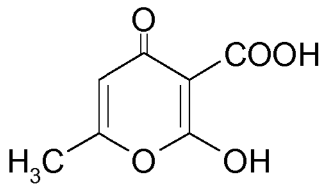

The dehydroacetic acid salts may be chosen from alkali metal (sodium, potassium) salts. Preferably, it is the sodium salt: sodium dehydroacetate.

Advantageously, 4-(3-ethoxy-4-hydroxyphenyl)butan-2-one and dehydroacetic acid or a salt thereof are present in said mixture in a content such that the weight ratio of 4-(3-ethoxy-4-hydroxyphenyl)butan-2-one/dehydroacetic acid or a salt thereof (preferably sodium dehydroacetate) ranges from 4 to 60, preferably ranging from 5 to 50.

The antimicrobial mixture according to the invention has synergistic antimicrobial activity, in particular on moulds, especially on *Aspergillus niger,* and on yeasts, in particular on *Candida albicans.*

Preferentially, the antimicrobial mixture according to the invention contains sodium dehydroacetate.

The antimicrobial mixture may have a 4-(3-ethoxy-4-hydroxyphenyl)butan-2-one/sodium dehydroacetate weight ratio ranging from 10 to 60, preferably ranging from 15 to 50. Such a mixture has good antimicrobial activity on yeasts, in particular on *Candida albicans.*

The antimicrobial mixture may have a 4-(3-ethoxy-4-hydroxyphenyl)butan-2-one/sodium dehydroacetate weight ratio ranging from 4 to 40, preferably ranging from 5 to 30. Such a mixture has good antimicrobial activity on moulds, especially on *Aspergillus niger.*

A subject of the invention is also a composition comprising, in a physiologically acceptable medium, the antimicrobial mixture described previously.

The term "physiologically acceptable medium" means a medium that is compatible with human keratin materials such as the skin, the scalp, the hair and the nails. Said medium may comprise one or more additional ingredients other than the organic acid compound described previously.

The compound 4-(3-ethoxy-4-hydroxyphenyl)butan-2-one may be present in the composition according to the invention at an amount ranging from 0.01% to 5% by weight relative to the total weight of the composition, preferably ranging from 0.01% to 3% by weight, preferentially ranging from 0.01% to 2.5% by weight and more preferentially ranging from 0.01% to 2% by weight.

A subject of the invention is also a composition comprising, in a physiologically acceptable medium, the antimicrobial mixture described previously.

The term "physiologically acceptable medium" means a medium that is compatible with human keratin materials such as the skin, the scalp, the hair and the nails. Said medium may comprise one or more additional ingredients other than the ketone compound or the organic acid compound described previously.

The composition may comprise at least one additional ingredient chosen from water, oils, polyols containing from 2 to 10 carbon atoms, gelling agents, surfactants, film-forming polymers, colorants, fragrances, fillers, UV-screening agents, plant extracts, cosmetic and dermatological active agents, and salts.

The composition according to the invention may comprise an aqueous phase.

The composition may comprise water, which may be present at a content ranging from 5% to 90% by weight relative to the total weight of the composition, and preferably ranging from 35% to 75% by weight.

The composition may also comprise a polyol that is water-miscible at ambient temperature (25°C), especially chosen from polyols especially containing from 2 to 10 carbon atoms, preferably containing from 2 to 6 carbon atoms, such as glycerol, propylene glycol, 1,3-propanediol, butylene glycol, pentylene glycol, hexylene glycol, dipropylene glycol, diethylene glycol or diglycerol. Advantageously, the composition according to the invention comprises 1,3-propanediol, especially in a content ranging from 0.1% to 20% by weight, preferably ranging from 0.1% to 10% by weight and preferentially ranging from 0.5% to 5% by weight, relative to the total weight of the composition.

The compositions according to the invention may be in the form of oil-in-water (O/W) emulsions, water-in-oil (W/O) emulsions or multiple emulsions (triple: W/O/W or O/W/O), oily solutions, oily gels, aqueous solutions, aqueous gels, solid compositions. These compositions are prepared according to the usual methods.

The compositions according to the invention may be more or less fluid and may have the appearance of a white or coloured cream, an ointment, a milk, a lotion, a serum, a paste or a foam. They may be optionally applied to the skin in aerosol form. They may also be in solid form, for example in the form of a stick or a compact powder.

The composition according to the invention may especially be in the form of:

- a makeup product, especially for making up the skin of the face, the body, or the lips or the eyelashes;
- an aftershave gel or lotion; a shaving product;
- a deodorant (stick, roll-on or aerosol);

- a hair-removing cream;
- a body hygiene composition such as a shower gel or a shampoo;
- a pharmaceutical composition;
- a solid composition such as a soap or a cleansing bar;
- an aerosol composition also comprising a pressurized propellant;
- a hairsetting lotion, a hair-styling cream or gel, a dye composition, a permanent-waving composition, a lotion or a gel for combating hair loss, or a hair conditioner;
- a composition for caring for or cleansing the skin.

A subject of the invention is also a process for preparing a composition, in particular a cosmetic or dermatological composition, comprising a step of mixing 4-(3-ethoxy-4-hydroxyphenyl)butan-2-one, the organic acid compound described previously, and one or more additional ingredients, especially cosmetic or dermatological ingredients, such as those described previously.

The invention is illustrated in greater detail in the example that follows. The amounts of the ingredients are expressed as weight percentages.

**Example 1: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of organic acid compound (referred to as substance B) is performed by calculating the synergy index (or FIC index) according to the following formula:

$$\text{FIC Index} = (\text{MICa with B/MICa}) + (\text{MICb with A/MICb})$$

with:

- MICa with B: minimum concentration of product A in the combination A + B which makes it possible to obtain an inhibitory effect

- MICb with A: minimum concentration of product B in the combination A + B which makes it possible to obtain an inhibitory effect.

- MICa: minimum inhibitory concentration of product A alone.

- MICb: minimum inhibitory concentration of product B alone.

This formula was described for the first time in the article by F.C. Kull, P.C. Eisman, H.D. Sylwestrowka, and R.L. Mayer, Applied Microbiology 9:538-541, 1961.

For each compound tested alone, the MIC is considered as the first concentration which makes it possible to obtain a microbial growth percentage of less than or equal to 25%.

As regards the combinations tested, MICa with b and MICb with a are the respective concentrations of A and of B in the combinations which make it possible to obtain a microbial growth percentage of less than or equal to 25%.

**Interpretation of the FIC Index:**

When the FIC index value is less than or equal to 1, it is considered that the combination of test compounds has a synergistic effect.

The results obtained are summarized in the following tables.

The combination of compounds A and B was tested on the following strains or a part thereof: *Aspergillus niger, Enterococcus faecalis, Staphylococcus aureus, Pseudomonas aeruginosa, Candida albicans.*

The microbial strain *Aspergillus niger* ATCC 6275, and a double-concentration Sabouraud broth liquid culture medium supplemented with polyoxyethylenated (20 OE) sorbitan monopalmitate (Tween 40 from Croda) and Phytagel© BioReagent were used (i.e. a mixture of 5 g of Phytagel + 0.6 g Tween 40 + 60 g of Sabouraud broth).

The microbial strain *Enterococcus faecalis* ATCC 33186 and a double-concentration BHI (Brain Heart Infusion) broth liquid culture medium were used.

The microbial strain *Staphylococcus aureus* ATCC 6538 and a double-concentration nutritive broth liquid culture medium were used.

The microbial strain *Pseudomonas aeruginosa* ATCC 9027 and a double-concentration nutritive broth liquid culture medium were used.
The microbial strain *Candida albicans* ATCC 10231 and a double-concentration Sabouraud broth liquid culture medium were used.
A 96-well microplate and an incubation temperature of 32.5°C are used.
The incubation time of the microplate is:

- from 18 to 24 h under aerobic conditions for *Candida albicans* ATCC 10231, *Pseudomonas aeruginosa* ATCC 9027 and *Staphylococcus aureus* ATCC 6538;
- from 24 to 30 h under aerobic conditions for microbial *Aspergillus niger* ATCC 6275;
- from 24 to 48 h under aerobic conditions for *Enterococcus faecalis* ATCC 33186.

**Tests**

For each compound:

A = 4-(3-ethoxy-4-hydroxyphenyl)butan-2-one compound
B = organic acid compound

A 10% (weight/volume) stock solution was prepared by mixing 1 g of compound in 9 ml of aqueous 1 ‰ agar solution. Successive dilutions were made with the 1‰ agar solution.

• Tests of compounds A and B alone

50 µl of each of the daughter solutions obtained containing compound A or B are added to the microplate wells. 100 µl of Sabouraud liquid nutrient broth inoculated at double concentration with the strain *Candida albicans* and 50 µl of aqueous 1‰ agar solution are also added thereto.

• Tests of compounds A and B as a mixture

50 µl of each of the daughter solutions obtained containing compound A and 50 µl of each of the daughter solutions obtained containing compound B are added to the microplate wells. 100 µl of Sabouraud liquid nutrient broth inoculated at double concentration with the strain *Candida albicans* are also added thereto.

**Microbial growth control**

A positive microbial growth control was also prepared. The positive microbial growth control corresponds to a mixture of 100 µl of aqueous 1‰ agar solution with 100 µl of Sabouraud liquid nutrient broth seeded at double concentration with the strain *Candida albicans* in the absence of compounds A and B.

**Absorbance control of compounds A and B alone**

An absorbance control was performed in parallel on compounds A and B alone. This control corresponds to 100 µl of double concentration sterile Sabouraud liquid nutrient broth + 100 µl of double concentration compound A or B.
In the three cases (absorbance control, growth control and test), the final volume present in each of the microplate wells is 200 µl.
In the two cases (test and control), the inoculum represents the concentration of the strain *Candida albicans* present in the final volume of the wells (200µl) and is between 2 and $6 \times 10^5$ cfu/ml of *Candida albicans.*
The minimum inhibitory concentration (MIC) of each compound A and B alone and in combination was determined in a known manner by means of optical density measurements at a wavelength of 620 nm.
The test as described above (tests, absorbance controls and growth control) was performed again to test the combination A + B on the following strains *Enterococcus faecalis, Staphylococcus aureus, Pseudomonas aeruginosa, Candida albicans.*
The following results were obtained with compound B1 = sodium benzoate:

***Staphylococcus aureus***

| concentrations tested (in weight %) | 0 of A | 0,0625 A | 0,125 A | 0,25 A | **0,5 A** |
|---|---|---|---|---|---|
| 0 of B1 | | 67 | 65 | 55 | 5 |
| 0,0625 B1 | 51 | 48 | 37 | 41 | 42 |
| 0,125 B1 | 34 | 35 | 35 | **10 (FIC 0,75)** | 1 |
| 0,25 B1 | 31 | **19 (FIC 0,63)** | **15 (FIC 0,75)** | **4 (FIC 1)** | 0 |
| **0,5 B1** | 5 | **3** | **3** | **0** | 3 |

| % MIC of A alone | % MIC of B1 alone | MIC of each compound as a mixture | | FIC Index | |
|---|---|---|---|---|---|
| | | A % | B1 % | | |
| 0,5 | 0,5 | 0,0625 | 0,25 | 0,63 | Ratio A/B1 = 0.25 |

The results obtained show synergistic inhibitory activity for the mixtures:

i) 0.0625% of A and 0.25% of B1, i.e. ratio A/B1 = 0.25

ii) 0.125% of A and 0.25% of B1, i.e. ratio A/B1 = 0.5

iii) 0.25% of A and 0.25% of B1, i.e. ratio A/B1 = 1

iv) 0.25% of A and 0.125% of B1, i.e. ratio A/B1 = 2

***Candida albicans***

| concentrations tested (in weight %) | 0 A | 0,025 A | 0,05 A | **0,1 A** |
|---|---|---|---|---|
| 0 B1 | | 55 | 31 | 19 |
| 0,025 B1 | 55 | 41 | 33 | 17 |
| 0,05 B1 | 33 | 27 | **19 (FIC 0,5)** | 10 |
| 0,1 B1 | 24 | **21 (FIC 0,75)** | **18 (FIC 1)** | 10 |
| **0,2 B1** | 11 | 7 | 5 | 2 |

| % MIC of A alone | % MIC of B1 alone | MIC of each compound as a mixture | | FIC Index | |
|---|---|---|---|---|---|
| | | A % | B1 % | | |
| 0,1 | 0,2 | 0,025 | 0,1 | 0,75 | Ratio A/B1 = 0.25 |

The results obtained show synergistic inhibitory activity for the mixtures:

i) 0.025% of A and 0.1% of B1, i.e. ratio A/B1 = 0.25

ii) 0.05% of A and 0.1% of B1, i.e. ratio A/B1 = 0.5

iii) 0.05% of A and 0.05% of B1, i.e. ratio A/B1 = 1

***Pseudomonas aeruginosa***

| concentrations tested (in weight %) | 0 A | 0,0625 A | 0,125 A | 0,25 A | 0,5 A | **1 A** |
|---|---|---|---|---|---|---|
| 0 B1 | | 133 | 142 | 79 | 74 | 22 |
| 0,0625 B1 | 93 | 40 | 90 | 91 | 79 | 42 |
| 0,125 B1 | 96 | 117 | 105 | 81 | 79 | 20 |
| 0,25 B1 | 116 | 96 | 80 | 79 | 80 | 24 |
| 0,5 B1 | 89 | **19 (FIC 0,56)** | **19 (FIC 0,63)** | **5 (FIC 0,75)** | **0 (FIC 1)** | 12 |
| **1 B** | 0 | 0 | 0 | 0 | 0 | 33 |

| % MIC of A alone | % MIC of B1 alone | MIC of each compound as a mixture | | FIC Index | |
|---|---|---|---|---|---|
| | | A % | B1 % | | |
| 1 | 1 | 0,0625 | 0,5 | 0,56 | Ratio A/B1 = 0.125 |

The results obtained show synergistic inhibitory activity for the mixtures:

i) 0.0625% of A and 0.5% of B1, i.e. ratio A/B1 = 0.125

ii) 0.125% of A and 0.5% of B1, i.e. ratio A/B1 = 0.25

iii) 0.25% of A and 0.5% of B1, i.e. ratio A/B1 = 0.5

iv) 0.5% of A and 0.5% of B1, i.e. ratio A/B1 = 1

**Example 2: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of sorbic acid (referred to as substance B2) and a mixture of 4-(3-ethoxy-4-hydroxyphenyl)butan-2-one (referred to as substance A) and of potassium sorbate (referred to as substance B3) is carried out according to the protocol described in Example 1.

The combination of compounds A and B2 was tested on the following strains: *Staphylococcus aureus, Candida albicans, Aspergillus niger, Enteroccoccus faecalis.*

The combination of compounds A and B3 was tested on the following strains: *Aspergillus niger, Enteroccoccus faecalis.*

The following results were obtained:

**A) Mixtures with compound B2: sorbic acid**

***Staphylococcus aureus***

| concentrations tested (in weight %) | 0 of A | 0,0625 A | 0,125 A | 0,25 A | **0,5 A** |
|---|---|---|---|---|---|
| 0 de B2 | | 63 | 60 | 52 | 1 |
| 0,125 B2 | 52 | 59 | 62 | 47 | 1 |
| 0,25 B2 | 28 | **12 (FIC 0,63)** | **6 (FIC 0,75)** | **0 (FIC 1)** | 0 |
| **0,5 B2** | -5 | 0 | 1 | 0 | 0 |

| % MIC of A alone | % MIC of B2 alone | MIC of each compound as a mixture | | FIC Index | |
|---|---|---|---|---|---|
| | | A % | B2 % | | |
| 0,5 | 0,5 | 0,0625 | 0,25 | 0,63 | Ratio A/B2 = 0.25 |

The results obtained show synergistic inhibitory activity for the mixtures:

i) 0.0625% of A and 0.25% of B2, i.e. ratio A/B2 = 0.25

ii) 0.125% of A and 0.25% of B2, i.e. ratio A/B2 = 0.5

iii) 0.25% of A and 0.25% of B2, i.e. ratio A/B2 = 1

***Candida albicans***

| concentrations tested (in weight %) | 0 of A | 0,025 A | 0,05 A | 0,1 A |
|---|---|---|---|---|
| 0 of B2 | | 56 | 41 | 16 |
| 0,025 B2 | 37 | 31 | 24 | 18 |
| 0,05 B2 | 24 | **11 (FIC 0,75)** | **12 (FIC 1)** | 8 |
| 0,1 B2 | 21 | **20** | **14** | 6 |

| % MIC of A alone | % MIC of B2 alone | MIC of each compound as a mixture | | FIC Index | |
|---|---|---|---|---|---|
| | | A % | B2 % | | |
| 0,1 | 0,1 | 0,025 | 0,05 | 0,75 | Ratio A/B2 = 0.5 |

The results obtained show synergistic inhibitory activity for the mixtures:

i) 0.025% of A and 0.05% of B2, i.e. ratio A/B2 = 0.5
ii) 0.05% of A and 0.05% of B2, i.e. ratio A/B2 = 1

*Aspergillus niger*

| concentrations tested (in weight %) | 0 of A | 0,0625 A | 0,125 A | **0,25 A** |
|---|---|---|---|---|
| 0 of B2 | | 84 | 40 | 6 |
| 0,0125 B2 | 98 | 89 | 37 | 5 |
| 0,25 B2 | 95 | **2 (0,75)** | **3 (FIC 1)** | -2 |
| **0,5 B2** | 8 | **0** | **1** | -4 |

| % MIC of A alone | % MIC of B2 alone | MIC of each compound as a mixture | | FIC Index | |
|---|---|---|---|---|---|
| | | A % | B2 % | | |
| 0,25 | 0,5 | 0,0625 | 0,25 | 0,75 | Ratio A/B2 = 0.25 |

The results obtained show synergistic inhibitory activity for the mixtures:

i) 0.0625% of A and 0.25% of B2, i.e. ratio A/B2 = 0.25
ii) 0.125% of A and 0.25% of B2, i.e. ratio A/B2 = 0.5

*Enteroccoccus faecalis*

| concentrations tested (in weight %) | 0 of A | 0,0625 A | 0,125 A | 0,25 A | 0,5 A | **1 A** |
|---|---|---|---|---|---|---|
| 0 of B2 | | 82 | 86 | 105 | 100 | 15 |
| 0,25 B2 | 53 | 91 | 75 | 5 | 100 | 5 |
| 0,5 B2 | 78 | 42 | **0 (FIC 0,63)** | 90 | 85 | 13 |
| **1 B2** | 0 | 38 | 0 | 10 | **0** | -16 |

| % MIC of A alone | % MIC of B2 alone | MIC of each compound as a mixture | | FIC Index | |
|---|---|---|---|---|---|
| | | A % | B2 % | | |
| 1 | 1 | 0,125 | 0,5 | 0,63 | Ratio A/B2 = 0.25 |

The results obtained show synergistic inhibitory activity for the mixture:

i) 0.125% of A and 0.5% of B2, i.e. ratio A/B2 = 0.25

**B) Mixtures with compound B3: potassium sorbate**

***Enterococcus faecalis***

| concentrations tested (in weight %) | 0 A | 0,125 A | 0,25 A | 0,5 A | 1 A | **2 A** |
|---|---|---|---|---|---|---|
| 0 B3 | | 56 | 55 | 52 | 28 | 24 |
| 1 B3 | 22 | **19 (FIC 0 ,57)** | **19 (FIC 0,63)** | **13 (FIC 0,75)** | **4 (FIC 1)** | **-1** |
| **2 B3** | 10 | 15 | 17 | 11 | -3 | **0** |

| % MIC of A alone | % MIC of B3 alone | MIC of each compound as a mixture | | FIC Index | |
|---|---|---|---|---|---|
| | | A % | B3 % | | |
| 2 | 2 | 0,125 | 1 | 0,57 | Ratio A/B3 = 0.125 |

The results obtained show synergistic inhibitory activity for the mixtures:

i) 0.125% of A and 1 % of B3, i.e. ratio A/B3 = 0.125

ii) 0.25% of A and 1 % of B3, i.e. ratio A/B3 = 0.25

iii) 0.5% of A and 1% of B3, i.e. ratio A/B3 = 0.5

iv) 1 % of A and 1% of B3, i.e. ratio A/B3 = 1

***Aspergillus niger***

| concentrations tested (in weight %) | 0 A | 0.025 A | 0.05 A | **0.1 A** |
|---|---|---|---|---|
| 0 B3 | | 65 | 40 | 15 |
| 0,025 B3 | 58 | 44 | **12 (FIC 0,75)** | 21 |
| 0,05 B3 | 37 | **10 (FIC 0,75)** | **16 (FIC 1)** | 8 |
| **0,1 B3** | 10 | 10 | 16 | 8 |

| % MIC of A alone | % MIC of B3 alone | MIC of each compound as a mixture | | FIC Index | |
|---|---|---|---|---|---|
| | | A % | B3 % | | |
| 0,1 | 0,1 | 0,025 | 0,05 | 0,75 | Ratio A/B3 = 0.5 |

The results obtained show synergistic inhibitory activity for the mixtures:

i) 0.025% of A and 0.05% of B3, i.e. ratio A/B3 = 0.5
ii) 0.05% of A and 0.05% of B3, i.e. ratio A/B3 = 1
iii) 0.05% of A and 0.025% of B3, i.e. ratio A/B3 = 2

**Example 3:**

A facial care oil-in-water emulsion having the following composition was prepared (contents in weight percentages):

| | |
|---|---|
| Sorbitan tristearate (Span 65 V from Croda) | 0,9 % |
| Glyceryl mono/distearate (36/64)/potassium stearate mixture (Tegin Pellets from Goldschmidt) | 3 % |
| Polyethylene glycol stearate (40 ethylene oxide units) | 2 % |
| **4-(3-ethoxy-4-hydroxyphenyl)butan-2-one** | **0,05** % |
| **Potassium sorbate** | **0,2** % |
| Propane-1,3-diol | 3 % |
| Mixture of mineral oil, microcrystalline wax and paraffin (Vaseline Blanche Codex 236 from Aiglon) | 4 % |
| Liquid fraction of shea butter (Shea Olein from Olvea) | 1 % |
| Cyclopentadimethylsiloxane | 5 % |
| Cetyl alcohol | 4 % |
| Apricot kernel oil | 0,3 % |
| Hydrogenated polyisobutene (Parleam from NOF Corporation) | 7,2 % |
| Myristyl myristate | 2 % |
| Stearic acid | 1,2 % |
| Caffeine | 0,1 % |
| Citric acid | 0,2 % |
| Glycerol | 3 % |
| Sodium hydroxide | 0,05 % |
| Water qs | 100 % |

**Example 4: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of methyl 4-hydroxybenzoate (referred to as substance B4) and a mixture of 4-(3-ethoxy-4-hydroxyphenyl)butan-2-one (referred to as substance A) and of propyl 4-hydroxybenzoate (referred to as substance B5) is carried out according to the protocol described in Example 1.

The combination of compounds A and B4 was tested on the following strains: *Staphylococcus aureus, Candida albicans, and Pseudomonas aeruginosa.*

The combination of compounds A and B5 was tested on the following strains: *Candida albicans, and Pseudomonas aeruginosa.*

The following results were obtained:

**A) Mixtures with compound B4: methyl 4-hydroxybenzoate**

*Staphylococcus aureus*

| Concentrations tested (in weight %) | 0 A | 0,0625 A | 0,125 A | 0,25 A | **0,5 A** |
|---|---|---|---|---|---|
| 0 B4 | | 66 | 61 | 51 | 1 |
| 0,25 B4 | 51 | 60 | 55 | 51 | 1 |
| 0,5 B4 | 44 | **16 (FIC 0,63)** | **14 (FIC 0,75)** | **6 (FIC 1)** | 3 |
| **1 B4** | **19** | 1 | 1 | 3 | 2 |

| % MIC of A alone | % MIC of B4 alone | MIC of each compound as a mixture | | FIC Index | |
|---|---|---|---|---|---|
| | | A% | B4 % | | |
| 0,5 | 1 | 0,0625 | 0,5 | 0,63 | Ratio A/B4 = 0.125 |

The results obtained show synergistic inhibitory activity for the mixtures:

i) 0.0625% of A and 0.5% of B4, i.e. ratio A/B4 = 0.125

ii) 0.125% of A and 0.5% of B4, i.e. ratio A/B4 = 0.25

iii) 0.25% of A and 0.5% of B4, i.e. ratio A/B4 = 0.5

Candida albicans

| concentrations tested (in weight %) | 0 A | 0,025 A | 0,05 A | **0,1 A** |
|---|---|---|---|---|
| 0 B4 | | 61 | 38 | 18 |
| 0,025 B4 | 67 | 53 | 36 | 19 |
| 0,05 B4 | 40 | 38 | **20 (FIC 0,75)** | 12 |
| 0,1 B4 | 28 | **23 (FIC 0,75)** | **15 (FIC 1)** | 10 |
| **0,2 B4** | 12 | 6 | 1 | 1 |

| % MIC of A alone | % MIC of B4 alone | MIC of each compound as a mixture | | FIC Index | |
|---|---|---|---|---|---|
| | | A% | B4 % | | |
| 0,1 | 0,2 | 0,05 | 0,05 | 0,75 | Ratio A/B4 = 1 |

The results obtained show synergistic inhibitory activity for the mixtures:

i) 0.025% of A and 0.1% of B4, i.e. ratio A/B4 = 0.25
ii) 0.05% of A and 0.1% of B4, i.e. ratio A/B4 = 0.5
iii) 0.05% of A and 0.05% of B4, i.e. ratio A/B4 = 1

*Pseudomonas aeruqinosa*

| concentrations tested (in weight %) | 0 A | 0,0625 A | 0,125 A | 0,25 A | 0,5 A | **1 A** |
|---|---|---|---|---|---|---|
| 0 B4 | | 37 | 52 | 78 | 52 | 24 |
| 0,0625 B4 | 187 | 135 | 113 | 101 | 66 | **3** |
| 0,125 B4 | 150 | 61 | 166 | 115 | 43 | 24 |
| 0,25 B4 | 142 | 99 | **4 (FIC 0,63)** | **1 (FIC 0,75)** | 0 (FIC 1) | -4 |
| **0,5 B4** | 1 | 0 | 0 | 0 | 0 | 34 |

| % MIC of A alone | % MIC of B4 alone | MIC of each compound as a mixture | | FIC Index | |
|---|---|---|---|---|---|
| | | A% | B4 % | | |
| 1 | 0,5 | 0,125 | 0,25 | 0,63 | Ratio A/B4 = 0.5 |

The results obtained show synergistic inhibitory activity for the mixtures:

i) 0.125% of A and 0.25% of B4, i.e. ratio A/B4 = 0.5
ii) 0.25% of A and 0.25% of B4, i.e. ratio A/B4 = 1
iii) 0.5% of A and 0.25% of B4, i.e. ratio A/B4 = 2

**B) Mixtures with compound B5: propyl 4-hydroxybenzoate**

*Candida albicans*

| concentrations tested (in weight %) | 0 A | 0,025 A | 0,05 A | **0,1 A** |
|---|---|---|---|---|
| 0 B5 | | 56 | 39 | 18 |
| 0,025 B5 | 52 | 43 | 32 | 19 |
| 0,05 B5 | 33 | **20 (FIC 0,75)** | **11 (FIC 1)** | 7 |
| **0,1 B5** | 21 | **13** | **6** | **2** |

| % MIC of A alone | % MIC of B5 alone | MIC of each compound as a mixture | | FIC Index | |
|---|---|---|---|---|---|
| | | A% | B5 % | | |
| 0,1 | 0,1 | 0,025 | 0,05 | 0,75 | Ratio A/B5 = 0.5 |

The results obtained show synergistic inhibitory activity for the mixtures:

i) 0.025% of A and 0.05% of B5, i.e. ratio A/B5 = 0.5

ii) 0.05% of A and 0.05% of B5, i.e. ratio A/B5 = 1

*Pseudomonas aeruqinosa*

| concentrations tested (in weight %) | 0 A | 0,0625 A | 0,125 A | 0,25 A | 0,5 A | 1 A |
|---|---|---|---|---|---|---|
| 0 B5 | | 117 | 54 | 87 | 64 | 45 |
| 0,125 B5 | 76 | 58 | 113 | 58 | 65 | 67 |
| 0,25 B5 | 45 | 36 | 31 | 25 | **20 (FIC≤ 0,75)** | **14 (FIC≤ 1)** |
| 0,5 B5 | 42 | 57 | 38 | 47 | **-23 (FIC ≤1)** | **-3** |
| **1 B5** | 24 | 0 | 33 | **-18** | **-17** | **8** |

| % MIC of A alone | % MIC of B5 alone | MIC of each compound as a mixture | | FIC Index | |
|---|---|---|---|---|---|
| | | A% | B5 % | | |
| ≥ 1 | 1 | 0,5 | 0,25 | ≤ 0,75 | Ratio A/B5 = 2 |

The results obtained show synergistic inhibitory activity for the mixtures:

i) 0.5% of A and 0.5% of B5, i.e. ratio A/B5 = 1
ii) 1 % of A and 0.5% of B5, i.e. ratio A/B5 = 2
iii) 0.5% of A and 0.25% of B5, i.e. ratio A/B5 = 2
iv) 1% of A and 0.25% of B5, i.e. ratio A/B5 = 4

**C)**

It was moreover noted that the following mixtures:

- mixture of 4-(3-ethoxy-4-hydroxyphenyl)butan-2-one with ethyl 4-hydroxybenzoate,
- mixture of 4-(3-ethoxy-4-hydroxyphenyl)butan-2-one with butyl 4-hydroxybenzoate,

tested in the same tests described previously have no synergistic antimicrobial activity.

**Example 5: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of 5-n-octanoylsalicylic acid (referred to as substance B6) is performed according to the method described in Example 1.

The following results were obtained:

*Candida albicans*

| concentrations tested (in weight %) | 0 A | 0,025 A | 0,05 A | 0,1 A | **0,2 A** |
|---|---|---|---|---|---|
| 0 B6 | | 74 | 69 | 36 | 6 |
| 0,0125 B6 | 66 | 48 | 37 | **13 (FIC 0,625)** | 1 |
| 0,025 B6 | 40 | 31 | **24 (FIC 0,5)** | **3 (FIC 0,75)** | 1 |
| 0,05 B6 | 30 | **6 (FIC 0,625)** | **5 (FIC 0,75)** | **1 (FIC 1)** | 0 |
| **0,1 B6** | 1 | -3 | 0 | -3 | -1 |

| % MIC of A alone | % MIC of B6 alone | MIC of each compound as a mixture | | FIC Index | |
|---|---|---|---|---|---|
| | | A% | B6 % | | |
| 0,2 | 0,1 | 0,05 | 0,025 | 0,5 | Ratio A/B6 = 2 |

The results obtained show synergistic inhibitory activity for the mixtures:

i) 0.0625% of A and 0.05% of B6, i.e. ratio A/B6 = 0.5

ii) 0.05% of A and 0.05% of B6, i.e. ratio A/B6 = 1

iii) 0.1% of A and 0.05% of B6, i.e. ratio A/B6 = 2

iv) 0.05% of A and 0.025% of B6, i.e. ratio A/B6 = 2

v) 0.1% of A and 0.025% of B6, i.e. ratio A/B6 = 4

vi) 0.1% of A and 0.0125% of B6, i.e. ratio A/B6 = 8

*Aspergillus niger*

| concentrations tested (in weight %) | 0 A | 0,0025 A | 0,05 A | 0,1 A | 0,2 A | **0,4 A** |
|---|---|---|---|---|---|---|
| 0 B6 | | 84 | 40 | 6 | 59 | 5 |
| 0,025 B6 | 98 | 111 | 103 | 97 | **10 (FIC 0,75)** | 4 |
| 0,05 B6 | 97 | 75 | 63 | 68 | **6 (FIC 1)** | 4 |
| **0,1 B6** | 17 | 17 | 8 | 5 | 3 | 0 |

| % MIC of A alone | % MIC of B6 alone | MIC of each compound as a mixture | | FIC Index | |
|---|---|---|---|---|---|
| | | A% | B6 % | | |
| 0,4 | 0,1 | 0,2 | 0,025 | 0,75 | Ratio A/B6 = 8 |

The results obtained show synergistic inhibitory activity for the mixtures:

i) 0.2% of A and 0.05% of B6, i.e. ratio A/B6 = 4

ii) 0.2% of A and 0.025% of B6, i.e. ratio A/B6 = 8

*Enteroccoccus faecalis*

| concentrations tested (in weight %) | 0 A | 0,0625 A | 0,125 A | 0,25 A | 0,5 A | **1 A** |
|---|---|---|---|---|---|---|
| 0 B6 | | 35 | 40 | 41 | 36 | 16 |
| 0,0125 B6 | 28 | 26 | **20 (FIC 0,625)** | **18 (FIC 0,75)** | **21 (FIC 1)** | -2 |
| **0,025 B6** | 2 | 2 | 1 | 2 | 2 | -19 |

| % MIC of A alone | % MIC of B6 alone | MIC of each compound as a mixture | | FIC Index | |
|---|---|---|---|---|---|
| | | A% | B6 % | | |
| 1 | 0,025 | 0,125 | 0,0125 | 0,63 | Ratio A/B6 = 10 |

The results obtained show synergistic inhibitory activity for the mixture:

i) 0.125% of A and 0.0125% of B6, i.e. ratio A/B6 = 10

ii) 0.25% of A and 0.0125% of B6, i.e. ratio A/B6 = 20

iii) 0.5% of A and 0.0125% of B6, i.e. ratio A/B6 = 40

**Example 6: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of caprylhydroxamic acid (referred to as substance B7) is performed according to the method described in Example 1.

The combination of compounds A and B7 was tested on the *Aspergillus niger* strain.

For B7, use was made of B' = caprylhydroxamic acid (compound B7) at 7.5% by weight in 1,3-propanediol (sold under the name Zeastat by the company Inolex Chemical).

The following results were obtained:

*Aspergillus niger*

| Concentrations tested (in weight %) | 0 A | 0,025 A | 0,05 A | 0,1 A | **0,2 A** |
|---|---|---|---|---|---|
| 0 B' | | 62 | 32 | 25 | 10 |
| 0,0125 B' | 79 | 36 | 23 | **8 (FIC 0,63)** | 6 |
| 0,025 B' | 57 | 22 | **16 (FIC 0,63)** | **11 (FIC 0,75)** | 10 |
| 0,05 B' | 28 | **16 (FIC 0,63)** | **14 (FIC 0,75)** | **4 (FIC 1)** | -3 |
| **0,1 B'** | 13 | 8 | 10 | 3 | 6 |

| **% MIC of A alone** | **% MIC of B' alone** | **MIC of each compound as a mixture** A% B'% | | **FIC Index** | **Ratio A/B' (Ratio A/B7)** |
|---|---|---|---|---|---|
| 0,2 | 0,1 | 0,025 | 0,05 | 0,63 | 0,5 (6,7) |

The results obtained show synergistic inhibitory activity for the mixtures:

i) 0.025% of A and 0.05% of B' (3.75 $10^{-3}$% of B7), i.e. ratio A/B7 = 6.7
ii) 0.05% of A and 0.05% of B' (3.75 $10^{-3}$% of B7), i.e. ratio A/B7 = 13.3
iii) 0.1% of A and 0.05% of B' (3.75 $10^{-3}$% of B7), i.e. ratio A/B7 = 26.7
iv) 0.05% of A and 0.025% of B' (1.875 $10^{-3}$% of B7), i.e. ratio A/B7 = 26.7
v) 0.1% of A and 0.025% of B' (1.875 $10^{-3}$% of B7), i.e. ratio A/B7 = 53.3
vi) 0.1% of A and 0.0125% of B' (0.94 $10^{-3}$% of B7), i.e. ratio A/B7 = 106

**Example 7: determination of the antimicrobial activity of the antimicrobial mixture**

The antimicrobial efficacy of the 4-(3-ethoxy-4-hydroxyphenyl)butan-2-one + caprylhydroxamic acid antimicrobial mixture (respective weight ratio of 0.16) was evaluated by the Challenge Test method.

Cosmetic formula

A facial care oil-in-water emulsion having the following composition was prepared (contents in weight percentages):

| | |
|---|---|
| Sorbitan tristearate (Span 65 V from Croda) | 0,9 % |
| Glyceryl mono/distearate (36/64)/potassium stearate mixture (Tegin Pellets from Goldschmidt) | 3 % |
| Polyethylene glycol stearate (40 ethylene oxide units) | 2 % |
| **4-(3-ethoxy-4-hydroxyphenyl)butan-2-one** | **0,15** % |
| **Caprylhydroxamic acid in solution at 7.5% by weight in 1,3-propanediol** | 1.5% |
| Propane-1,3-diol | 2% |
| Mixture of mineral oil, microcrystalline wax and paraffin (Vaseline Blanche Codex 236 from Aiglon) | 4 % |
| Liquid fraction of shea butter (Shea Olein from Olvea) | 1 % |
| Cyclopentadimethylsiloxane | 5 % |
| Cetyl alcohol | 4 % |
| Apricot kernel oil | 0,3 % |
| Hydrogenated polyisobutene (Parleam from NOF Corporation) | 7,2 % |
| Myristyl myristate | 2 % |
| Stearic acid | 1,2 % |
| Caffeine | 0,1 % |

(continued)

| | | |
|---|---|---|
| Citric acid | | 0,2 % |
| Glycerol | | 3 % |
| Sodium hydroxide | | 0,05 % |
| Water | qs | 100% |

Control formula A: Formulation similar to the preceding one containing 0.15% of 4-(3-ethoxy-4-hydroxyphenyl)butan-2-one and without caprylhydroxamic acid (1.5% compensated with water)
Control formula B: Similar formula containing 1.5% of caprylhydroxamic acid (in solution with 1,3-propanediol) and without 4-(3-ethoxy-4-hydroxyphenyl)butan-2-one (0.15% compensated with water)

Microorganism cultures

5 pure cultures of microorganisms were used.

| MICROORGANISMS | Subculturing medium | T° | ATCC |
|---|---|---|---|
| *Escherichia coli* (Ec) | Trypto-casein soya | 35°C | 8739 |
| *Enterococcus faecalis* (Ef) | Trypto-casein soya | 35°C | 33186 |
| *Pseudomonas aeruginosa* (Pa) | Trypto-casein soya | 35°C | 19429 |
| *Candida albicans* (Ca) | Sabouraud | 35°C | 10231 |
| *Aspergillus niger* (An) | Malt | 35°C | 6275 |
| ATCC = American Type Culture Collection | | | |

The strains of gram-negative bacteria (*Escherichia coli* and *Pseudomonas aeruginosa*), gram-positive bacterium (*Enterococcus faecalis*), yeast (*Candida albicans*), and mould (*Aspergillus niger*) are inoculated into subculturing medium, respectively the day before inoculation for the bacteria and the yeast, and 5 days before inoculation for the mould.
On the day of inoculation:

- a suspension in tryptone salt diluent is prepared, respectively, for the bacteria and the yeast, so as to obtain by spectrophotometer a suspension with an optical density of between 35% and 45% of transmitted light at 544 nm;
- for the mould, the spores are collected by washing the agar with 6 to 7 ml of harvesting solution and the suspension is recovered in a sterile tube or flask.

After homogenizing the microbial suspension, 0.2 ml of inoculum is introduced into each pill bottle (the suspensions are used pure: between $1\times10^8$ and $3\times10^8$ cfu per ml) and the microbial suspension in the 20 g of product (= cosmetic formula) is homogenized thoroughly using a spatula.
The content of microorganisms present in the product corresponds after homogenization to a concentration of $10^6$ microorganisms per gram of product, i.e. inoculation to 1% of an inoculum containing $10^8$ microorganisms per ml.
After 7 days of contact time between the microorganisms and the product at 22°C $\pm$ 2°C and in the dark, tenfold dilutions are performed and the number of revivable microorganisms remaining in the product is counted.

Results

| | No. of CFU/gram of product at T7 days | | | | |
|---|---|---|---|---|---|
| | *E.coli* | *P. aeruginosa* | *E. faecalis* | C. *albicans* | *A. niger* |
| Antimicrobial mixture | <200 | <200 | <200 | <200 | 2 E3 |
| <200 CFU: sensitivity threshold of the method | | | | | |

**Example 8: determination of the synergistic antimicrobial activity as MIC**

The demonstration of a synergistic antimicrobial activity effect with a mixture of 4-(3-ethoxy-4-hydroxyphenyl)butan-2-one (referred to as substance A) and of sodium dehydroacetate (referred to as substance B8) is performed according to the protocol described in Example 1.

The following results were obtained:

*Candida albicans*

| Concentrations tested (in weight %) | 0 A | 0,025 A | 0,05 A | **0,1 A** |
|---|---|---|---|---|
| 0 B8 | | 53 | 35 | 18 |
| 0,00125 B8 | 28 | **19 (FIC 0,75)** | **13 (FIC 1)** | 8 |
| **0,0025 B8** | 15 | 8 | 6 | 3 |

| % MIC of A alone | % MIC of B8 alone | MIC of each compound as a mixture A % B8 % | | FIC Index | |
|---|---|---|---|---|---|
| 0,1 | 0,0025 | 0,025 | 0,000125 | 0,75 | Ratio A/B8 = 20 |

The results obtained show synergistic inhibitory activity for the mixtures:

i) 0.025% of A and 0.00125% of B8, i.e. ratio A/B8 = 20
ii) 0.05% of A and 0.00125% of B8, i.e. ratio A/B8 = 40

*Aspergillus niger*

| Concentrations tested (in weight %) | 0 A | 0,0625 A | 0,125 A | **0,25 A** |
|---|---|---|---|---|
| 0 B8 | | 96 | 41 | 7 |
| 0,0025 B8 | 97 | 69 | 29 | 4 |
| 0,005 B8 | 29 | **12 (FIC 0,5)** | **3 (FIC 0,75)** | 2 |
| 0,01 B8 | 3 | **2 (FIC 0,75)** | **2 (FIC 1)** | 2 |
| **0,02 B8** | 3 | 2 | 2 | 2 |

| % MIC of A alone | % MIC of B8 alone | MIC of each compound as a mixture | | FIC Index | |
|---|---|---|---|---|---|
| | | A % | B8 % | | |
| 0,25 | 0,02 | 0,0625 | 0,01 | 0,75 | Ratio A/B8 = 6.25 |

The results obtained show synergistic inhibitory activity for the mixtures:

i) 0.0625% of A and 0.01 % of B8, i.e. ratio A/B8 = 6.25

ii) 0.125% of A and 0.01% of B8, i.e. ratio A/B8 = 12.5

iii) 0.0625% of A and 0.005% of B8, i.e. ratio A/B8 = 12.5

iv) 0.125% of A and 0.005% of B8, i.e. ratio A/B8 = 25

## Claims

**1.** Antimicrobial mixture comprising 4-(3-ethoxy-4-hydroxyphenyl)butan-2-one and an organic acid compound chosen from:

i) a benzoic acid salt;
ii) sorbic acid or a salt thereof;
iii) methyl 4-hydroxybenzoate or propyl 4-hydroxybenzoate;
iv) 5-n-octanoylsalicylic acid;
v) a hydroxamic acid or a salt thereof, of formula (I):

$$R\text{-}C(=O)\text{-}NH\text{-}OH \qquad (I)$$

in which R represents a linear or branched, saturated or unsaturated $C_5$ to $C_{11}$ alkyl radical;
vi) dehydroacetic acid or a salt thereof.

**2.** Mixture according to the preceding claim, **characterized in that** the organic acid compound is a benzoic acid salt.

**3.** Mixture according to the preceding claim, **characterized in that** the benzoic acid salt is chosen from alkali metal salts, alkaline-earth metal salts, the monoethanolamine salt and the ammonium salt.

**4.** Mixture according to either of Claims 2 and 3, **characterized in that** the benzoic acid salt is the sodium salt.

**5.** Mixture according to one of Claims 2 to 4, **characterized in that** it comprises 4-(3-ethoxy-4-hydroxyphenyl)butan-2-one and benzoic acid or a salt thereof in amounts such that the 4-(3-ethoxy-4-hydroxyphenyl)butan-2-one/benzoic acid salt weight ratio ranges from 0.1 to 3, preferably ranges from 0.1 to 1.5, preferentially ranging from 0.2 to 1.5 and more preferentially ranging from 0.2 to 1.2.

**6.** Antimicrobial mixture according to Claim 1, **characterized in that** the organic acid compound is sorbic acid or a salt thereof.

**7.** Mixture according to the preceding claim, **characterized in that** the sorbic acid salt is chosen from alkali metal salts, alkaline-earth metal salts and the triethanolamine salt, and is preferably the potassium salt.

**8.** Mixture according to one of Claims 6 and 7, **characterized in that** it comprises 4-(3-ethoxy-4-hydroxyphenyl)butan-2-one and sorbic acid or a salt thereof in amounts such that the 4-(3-ethoxy-4-hydroxyphenyl)butan-2-one/sorbic acid or a salt thereof weight ratio ranges from 0.1 to 2.5, preferably ranging from 0.1 to 1.5, preferentially ranging from 0.2 to 1.5 and more preferentially ranging from 0.2 to 1.2.

**9.** Antimicrobial mixture according to one of Claims 6 to 8, **characterized in that** the antimicrobial mixture comprises sorbic acid.

**10.** Antimicrobial mixture according to the preceding claim, **characterized in that** it has a 4-(3-ethoxy-4-hydroxyphenyl)butan-2-one/sorbic acid weight ratio ranging from 0.1 to 1.5, and preferably ranging from 0.2 to 1.2.

**11.** Antimicrobial mixture according to Claim 9, **characterized in that** it has a 4-(3-ethoxy-4-hydroxyphenyl)butan-2-one/sorbic acid weight ratio ranging from 0.1 to 1.5, preferably ranging from 0.4 to 1.2.

**12.** Antimicrobial mixture according to Claim 9, **characterized in that** it has a 4-(3-ethoxy-4-hydroxyphenyl)butan-2-one/sorbic acid weight ratio ranging from 0.1 to 0.8, preferably ranging from 0.2 to 0.6.

**13.** Antimicrobial mixture according to Claim 9, **characterized in that** it has a 4-(3-ethoxy-4-hydroxyphenyl)butan-2-one/sorbic acid weight ratio ranging from 0.15 to 0.4, preferably ranging from 0.2 to 0.3.

**14.** Antimicrobial mixture according to one of Claims 6 to 8, **characterized in that** the antimicrobial mixture comprises potassium sorbate.

**15.** Antimicrobial mixture according to the preceding claim, **characterized in that** it has a 4-(3-ethoxy-4-hydroxyphenyl)butan-2-one/potassium sorbate weight ratio ranging from 0.1 to 1.5, preferably from 0.1 to 1.2.

**16.** Antimicrobial mixture according to Claim 14, **characterized in that** it has a 4-(3-ethoxy-4-hydroxyphenyl)butan-2-one/potassium sorbate weight ratio ranging from 0.3 to 2.5, preferably ranging from 0.3 to 1.5.

**17.** Antimicrobial mixture according to Claim 1, **characterized in that** the organic acid compound is an ester chosen from methyl 4-hydroxybenzoate and propyl 4-hydroxybenzoate.

**18.** Mixture according to the preceding claim, **characterized in that** it comprises 4-(3-ethoxy-4-hydroxyphenyl)butan-2-one and said ester in amounts such that the 4-(3-ethoxy-4-hydroxyphenyl)butan-2-one/ester weight ratio ranges from 0.3 to 5, preferably ranges from 0.4 to 4.5.

**19.** Mixture according to Claim 17, **characterized in that** it has a 4-(3-ethoxy-4-hydroxyphenyl)butan-2-one/ester weight ratio ranging from 0.1 to 1.5, preferably ranging from 0.2 to 1.5 and preferentially ranging from 0.4 to 1.2.

**20.** Antimicrobial mixture according to one of Claims 17 to 19, **characterized in that** the ester is methyl 4-hydroxybenzoate.

**21.** Mixture according to the preceding claim, **characterized in that** it has a 4-(3-ethoxy-4-hydroxyphenyl)butan-2-one/methyl 4-hydroxybenzoate weight ratio ranging from 0.4 to 3, preferably ranging from 0.4 to 2.2.

**22.** Mixture according to Claim 20, **characterized in that** it has a 4-(3-ethoxy-4-hydroxyphenyl)butan-2-one/methyl 4-hydroxybenzoate weight ratio ranging from 0.1 to 0.8, and preferably ranging from 0.1 to 0.6.

**23.** Mixture according to Claim 20, **characterized in that** it has a 4-(3-ethoxy-4-hydroxyphenyl)butan-2-one/methyl 4-hydroxybenzoate weight ratio ranging from 0.1 to 1.5.

**24.** Antimicrobial mixture according to one of Claims 17 to 19, **characterized in that** the ester is propyl 4-hydroxybenzoate.

**25.** Mixture according to Claim 24, **characterized in that** it has a 4-(3-ethoxy-4-hydroxyphenyl)butan-2-one/propyl 4-hydroxybenzoate weight ratio ranging from 0.3 to 1.5, preferably ranging from 0.4 to 1.2.

**26.** Mixture according to Claim 24, **characterized in that** it has a 4-(3-ethoxy-4-hydroxyphenyl)butan-2-one/propyl 4-hydroxybenzoate weight ratio ranging from 0.7 to 5, preferably from 0.8 to 4.5.

**27.** Antimicrobial mixture according to Claim 1, **characterized in that** the organic acid compound is 5-n-octanoylsalicylic acid.

**28.** Antimicrobial mixture according to the preceding claim, **characterized in that** it comprises 4-(3-ethoxy-4-hydroxyphenyl)butan-2-one and 5-n-octanoylsalicylic acid in amounts such that the 4-(3-ethoxy-4-hydroxyphenyl)butan-2-one/5-n-octanoylsalicylic acid weight ratio ranges from 0.5 to 60, preferably ranges from 0.5 to 50, preferentially ranging from 0.5 to 45.

**29.** Antimicrobial mixture according to either of Claims 27 and 28, **characterized in that** it has a 4-(3-ethoxy-4-hydroxyphenyl)butan-2-one/5-n-octanoylsalicylic acid weight ratio ranging from 3 to 12, preferably ranging from 3 to 10.

**30.** Antimicrobial mixture according to either of Claims 27 and 28, **characterized in that** it has a 4-(3-ethoxy-4-hydroxyphenyl)butan-2-one/5-n-octanoylsalicylic acid weight ratio ranging from 0.5 to 12, preferably ranging from 0.5 to 10.

**31.** Antimicrobial mixture according to either of Claims 27 and 28, **characterized in that** it has a 4-(3-ethoxy-4-hydroxyphenyl)butan-2-one/5-n-octanoylsalicylic acid weight ratio ranging from 7 to 60, preferably ranging from 8 to 50, and preferentially ranging from 9 to 45.

**32.** Antimicrobial mixture according to Claim 1, **characterized in that** the organic acid compound is hydroxamic acid of formula (I).

**33.** Mixture according to the preceding claim, **characterized in that** said hydroxamic acid is chosen from caprohydroxamic acid, caprylhydroxamic acid, caprihydroxamic acid and laurylhydroxamic acid, and mixtures thereof.

**34.** Antimicrobial mixture according to either of Claims 32 and 33, **characterized in that** the hydroxamic acid is caprylhydroxamic acid.

**35.** Antimicrobial mixture according to one of Claims 32 to 34, **characterized in that** it comprises 1,3-propanediol.

**36.** Mixture according to the preceding claim, **characterized in that** the 1,3-propanediol is present according to a 1,3-propanediol/hydroxamic acid (I) weight ratio ranging from 5 to 20, preferably ranging from 8 to 17, and better still ranging from 10 to 15.

**37.** Mixture according to one of Claims 32 to 36, **characterized in that** it comprises 4-(3-ethoxy-4-hydroxyphenyl)butan-2-one and the hydroxamic acid (I) in amounts such that the 4-(3-ethoxy-4-hydroxyphenyl)butan-2-one/hydroxamic acid (I) weight ratio ranges from 4 to 150, preferably ranges from 30 to 130, preferentially ranges from 45 to 130, more preferentially ranges from 60 to 130, in particular ranges from 90 to 130, and in particular ranges from 95 to 120.

**38.** Antimicrobial mixture according to Claim 1, **characterized in that** the organic acid compound is dehydroacetic acid or a salt thereof.

**39.** Mixture according to the preceding claim, **characterized in that** the dehydroacetic acid salt is chosen from alkali metal salts, and is preferably the sodium salt.

**40.** Antimicrobial mixture according to either of Claims 38 and 39, **characterized in that** it contains sodium dehydroacetate.

**41.** Mixture according to one of Claims 38 to 40, **characterized in that** it comprises 4-(3-ethoxy-4-hydroxyphenyl)butan-2-one and dehydroacetic acid or a salt thereof in amounts such that the weight ratio of 4-(3-ethoxy-4-hydroxyphenyl)butan-2-one/dehydroacetic acid or a salt thereof ranges from 4 to 60, preferably ranges from 5 to 50.

**42.** Mixture according to Claim 40, **characterized in that** it has a 4-(3-ethoxy-4-hydroxyphenyl)butan-2-one/sodium dehydroacetate weight ratio ranging from 10 to 60, preferably ranging from 15 to 50.

**43.** Mixture according to Claim 40, **characterized in that** it has a 4-(3-ethoxy-4-hydroxyphenyl)butan-2-one/sodium dehydroacetate weight ratio ranging from 4 to 40, preferably ranging from 5 to 30.

**44.** Composition comprising, in a physiologically acceptable medium, an antimicrobial mixture according to one of Claims 1 to 43.

**45.** Composition according to the preceding claim, **characterized in that** it comprises at least one additional ingredient chosen from water, oils, polyols containing from 2 to 10 carbon atoms, gelling agents, surfactants, film-forming polymers, colorants, fragrances, fillers, UV-screening agents, plant extracts, cosmetic and dermatological active agents, and salts.

**46.** Composition according to either of Claims 44 and 45, **characterized in that** the 4-(3-ethoxy-4-hydroxyphenyl)butan-2-one is present in a content ranging from 0.01% to 5% by weight relative to the total weight of the composition, preferably ranging from 0.01% to 3% by weight, and preferentially ranging from 0.01% to 2.5% by weight.

**47.** Use of an antimicrobial mixture according to any one of Claims 1 to 43, for the conservation of a composition

comprising a physiologically acceptable medium.

## Patentansprüche

1. Antimikrobielle Mischung, umfassend 4-(3-Ethoxy-4-hydroxyphenyl)butan-2-on und eine organische Säureverbindung, die ausgewählt ist aus:

   i) einem Benzoesäuresalz;
   ii) Sorbinsäure oder einem Salz davon;
   iii) 4-Hydroxybenzoesäuremethylester oder 4-Hydroxybenzoesäurebutylester;
   iv) 5-n-Octanoylsalicylsäure;
   v) einer Hydroxamsäure oder einem Salz davon der Formel (I):

   R-C(=O)-NH-OH (I),

   in der R für einen linearen oder verzweigten, gesättigten oder ungesättigten $C_5$- bis $C_n$-Alkylrest steht;
   vi) Dehydroessigsäure oder einem Salz davon.

2. Mischung nach dem vorhergehenden Anspruch, **dadurch gekennzeichnet, dass** es sich bei der organischen Säureverbindung um ein Benzoesäuresalz handelt.

3. Mischung nach dem vorhergehenden Anspruch, **dadurch gekennzeichnet, dass** das Benzoesäuresalz aus Alkalimetallsalzen, Erdalkalimetallsalzen, dem Monoethanolaminsalz und dem Ammoniumsalz ausgewählt ist.

4. Mischung nach einem der Ansprüche 2 und 3, **dadurch gekennzeichnet, dass** es sich bei dem Benzoesäuresalz um das Natriumsalz handelt.

5. Mischung nach einem der Ansprüche 2 bis 4, **dadurch gekennzeichnet, dass** sie 4-(3-Ethoxy-4-hydroxyphenyl)butan-2-on und Benzoesäure oder ein Salz davon in solchen Mengen umfasst, dass das Gewichtsverhältnis von 4-(3-Ethoxy-4-hydroxyphenyl)butan-2-on zu Benzoesäuresalz im Bereich von 0,1 bis 3, vorzugsweise im Bereich von 0,1 bis 1,5, bevorzugt im Bereich von 0,2 bis 1,5 und weiter bevorzugt im Bereich von 0,2 bis 1,2 liegt.

6. Antimikrobielle Mischung nach Anspruch 1, **dadurch gekennzeichnet, dass** es sich bei der organischen Säureverbindung um Sorbinsäure oder ein Salz davon handelt.

7. Mischung nach dem vorhergehenden Anspruch, **dadurch gekennzeichnet, dass** das Sorbinsäuresalz aus Alkalimetallsalzen, Erdalkalimetallsalzen und dem Triethanolaminsalz ausgewählt ist und vorzugsweise das Kaliumsalz ist.

8. Mischung nach einem der Ansprüche 6 und 7, **dadurch gekennzeichnet, dass** sie 4-(3-Ethoxy-4-hydroxyphenyl)butan-2-on und Sorbinsäure oder ein Salz davon in solchen Mengen umfasst, dass das Gewichtsverhältnis von 4-(3-Ethoxy-4-hydroxyphenyl)butan-2-on zu Sorbinsäure oder einem Salz davon im Bereich von 0,1 bis 2,5, vorzugsweise im Bereich von 0,1 bis 1,5, bevorzugt im Bereich von 0,2 bis 1,5 und weiter bevorzugt im Bereich von 0,2 bis 1,2 liegt.

9. Antimikrobielle Mischung nach einem der Ansprüche 6 bis 8, **dadurch gekennzeichnet, dass** die antimikrobielle Mischung Sorbinsäure umfasst.

10. Antimikrobielle Mischung nach dem vorhergehenden Anspruch, **dadurch gekennzeichnet, dass** sie ein Gewichtsverhältnis von 4-(3-Ethoxy-4-hydroxyphenyl)butan-2-on zu Sorbinsäure im Bereich von 0,1 bis 1,5 und vorzugsweise im Bereich von 0,2 bis 1,2 aufweist.

11. Antimikrobielle Mischung nach Anspruch 9, **dadurch gekennzeichnet, dass** sie ein Gewichtsverhältnis von 4-(3-Ethoxy-4-hydroxyphenyl)butan-2-on zu Sorbinsäure im Bereich von 0,1 bis 1,5, vorzugsweise im Bereich von 0,4 bis 1,2, aufweist.

12. Antimikrobielle Mischung nach Anspruch 9, **dadurch gekennzeichnet, dass** sie ein Gewichtsverhältnis von 4-(3-Ethoxy-4-hydroxyphenyl)butan-2-on zu Sorbinsäure im Bereich von 0,1 bis 0,8, vorzugsweise im Bereich von 0,2 bis 0,6, aufweist.

**13.** Antimikrobielle Mischung nach Anspruch 9, **dadurch gekennzeichnet, dass** sie ein Gewichtsverhältnis von 4-(3-Ethoxy-4-hydroxyphenyl)butan-2-on zu Sorbinsäure im Bereich von 0,15 bis 0,4, vorzugsweise im Bereich von 0,2 bis 0,3, aufweist.

**14.** Antimikrobielle Mischung nach einem der Ansprüche 6 bis 8, **dadurch gekennzeichnet, dass** die antimikrobielle Mischung Kaliumsorbat umfasst.

**15.** Antimikrobielle Mischung nach dem vorhergehenden Anspruch, **dadurch gekennzeichnet, dass** sie ein Gewichtsverhältnis von 4-(3-Ethoxy-4-hydroxyphenyl)butan-2-on zu Kaliumsorbat im Bereich von 0,1 bis 1,5, vorzugsweise von 0,1 bis 1,2, aufweist.

**16.** Antimikrobielle Mischung nach Anspruch 14, **dadurch gekennzeichnet, dass** sie ein Gewichtsverhältnis von 4-(3-Ethoxy-4-hydroxyphenyl)butan-2-on zu Kaliumsorbat im Bereich von 0,3 bis 2,5, vorzugsweise im Bereich von 0,3 bis 1,5, aufweist.

**17.** Antimikrobielle Mischung nach Anspruch 1, **dadurch gekennzeichnet, dass** es sich bei der organischen Säureverbindung um einen Ester handelt, der aus 4-Hydroxybenzoesäuremethylester und 4-Hydroxybenzoesäurepropylester ausgewählt ist.

**18.** Mischung nach dem vorhergehenden Anspruch, **dadurch gekennzeichnet, dass** sie 4-(3-Ethoxy-4-hydroxyphenyl)butan-2-on und den Ester in solchen Mengen umfasst, dass das Gewichtsverhältnis von 4-(3-Ethoxy-4-hydroxyphenyl)butan-2-on zu Ester im Bereich von 0,3 bis 5, vorzugsweise im Bereich von 0,4 bis 4,5, liegt.

**19.** Mischung nach Anspruch 17, **dadurch gekennzeichnet, dass** sie ein Gewichtsverhältnis von 4-(3-Ethoxy-4-hydroxyphenyl)butan-2-on zu Ester im Bereich von 0,1 bis 1,5, vorzugsweise im Bereich von 0,2 bis 1,5 und bevorzugt im Bereich von 0,4 bis 1,2 aufweist.

**20.** Antimikrobielle Mischung nach einem der Ansprüche 17 bis 19, **dadurch gekennzeichnet, dass** es sich bei dem Ester um 4-Hydroxybenzoesäuremethylester handelt.

**21.** Mischung nach dem vorhergehenden Anspruch, **dadurch gekennzeichnet, dass** sie ein Gewichtsverhältnis von 4-(3-Ethoxy-4-hydroxyphenyl)butan-2-on zu 4-Hydroxybenzoesäuremethylester im Bereich von 0,4 bis 3, vorzugsweise im Bereich von 0,4 bis 2,2, aufweist.

**22.** Mischung nach Anspruch 20, **dadurch gekennzeichnet, dass** sie ein Gewichtsverhältnis von 4-(3-Ethoxy-4-hydroxyphenyl)butan-2-on zu 4-Hydroxybenzoesäuremethylester im Bereich von 0,1 bis 0,8 und vorzugsweise im Bereich von 0,1 bis 0,6 aufweist.

**23.** Mischung nach Anspruch 20, **dadurch gekennzeichnet, dass** sie ein Gewichtsverhältnis von 4-(3-Ethoxy-4-hydroxyphenyl)butan-2-on zu 4-Hydroxybenzoesäuremethylester im Bereich von 0,1 bis 1,5 aufweist.

**24.** Antimikrobielle Mischung nach einem der Ansprüche 17 bis 19, **dadurch gekennzeichnet, dass** es sich bei dem Ester um 4-Hydroxybenzoesäurepropylester handelt.

**25.** Mischung nach Anspruch 24, **dadurch gekennzeichnet, dass** sie ein Gewichtsverhältnis von 4-(3-Ethoxy-4-hydroxyphenyl)butan-2-on zu 4-Hydroxybenzoesäurepropylester im Bereich von 0,3 bis 1,5, vorzugsweise im Bereich von 0,4 bis 1,2, aufweist.

**26.** Mischung nach Anspruch 24, **dadurch gekennzeichnet, dass** sie ein Gewichtsverhältnis von 4-(3-Ethoxy-4-hydroxyphenyl)butan-2-on zu 4-Hydroxybenzoesäurepropylester im Bereich von 0,7 bis 5, vorzugsweise von 0,8 bis 4,5, aufweist.

**27.** Antimikrobielle Mischung nach Anspruch 1, **dadurch gekennzeichnet, dass** es sich bei der organischen Säureverbindung um 5-n-Octanoylsalicylsäure handelt.

28. Antimikrobielle Mischung nach dem vorhergehenden Anspruch, **dadurch gekennzeichnet, dass** sie 4-(3-Ethoxy-4-hydroxyphenyl)butan-2-on und 5-n-Octanoylsalicylsäure in solchen Mengen umfasst, dass das Gewichtsverhältnis von 4-(3-Ethoxy-4-hydroxyphenyl)butan-2-on zu 5-n-Octanoylsalicylsäure im Bereich von 0,5 bis 60, vorzugsweise im Bereich von 0,5 bis 50, bevorzugt im Bereich von 0,5 bis 45, liegt.

29. Antimikrobielle Mischung nach einem der Ansprüche 27 und 28, **dadurch gekennzeichnet, dass** sie ein Gewichtsverhältnis von 4-(3-Ethoxy-4-hydroxyphenyl)butan-2-on zu 5-n-Octanoylsalicylsäure im Bereich von 3 bis 12, vorzugsweise im Bereich von 3 bis 10, aufweist.

30. Antimikrobielle Mischung nach einem der Ansprüche 27 und 28, **dadurch gekennzeichnet, dass** sie ein Gewichtsverhältnis von 4-(3-Ethoxy-4-hydroxyphenyl)butan-2-on zu 5-n-Octanoylsalicylsäure im Bereich von 0,5 bis 12, vorzugsweise im Bereich von 0,5 bis 10, aufweist.

31. Antimikrobielle Mischung nach einem der Ansprüche 27 und 28, **dadurch gekennzeichnet, dass** sie ein Gewichtsverhältnis von 4-(3-Ethoxy-4-hydroxyphenyl)butan-2-on zu 5-n-Octanoylsalicylsäure im Bereich von 7 bis 60, vorzugsweise im Bereich von 8 bis 50 und bevorzugt im Bereich von 9 bis 45 aufweist.

32. Antimikrobielle Mischung nach Anspruch 1, **dadurch gekennzeichnet, dass** es sich bei der organischen Verbindung um eine Hydroxamsäure der Formel (I) handelt.

33. Mischung nach dem vorhergehenden Anspruch, **dadurch gekennzeichnet, dass** die Hydroxamsäure aus Caprohydroxamsäure, Caprylhydroxamsäure, Caprihydroxamsäure und Laurylhydroxamsäure und Mischungen davon ausgewählt ist.

34. Antimikrobielle Mischung nach einem der Ansprüche 32 und 33, **dadurch gekennzeichnet, dass** es sich bei der Hydroxamsäure um Caprylhydroxamsäure handelt.

35. Antimikrobielle Mischung nach einem der Ansprüche 32 bis 34, **dadurch gekennzeichnet, dass** sie 1,3-Propandiol umfasst.

36. Mischung nach dem vorhergehenden Anspruch, **dadurch gekennzeichnet, dass** das 1,3-Propandiol gemäß einem Gewichtsverhältnis von 1,3-Propandiol zu Hydroxamsäure (I) im Bereich von 5 bis 20, vorzugsweise im Bereich von 8 bis 17 und noch besser im Bereich von 10 bis 15 vorliegt.

37. Mischung nach einem der Ansprüche 32 bis 36, **dadurch gekennzeichnet, dass** sie 4-(3-Ethoxy-4-hydroxyphenyl)butan-2-on und die Hydroxamsäure (I) in solchen Mengen umfasst, dass das Gewichtsverhältnis von 4-(3-Ethoxy-4-hydroxyphenyl)butan-2-on zu Hydroxamsäure (I) im Bereich von 4 bis 150, vorzugsweise im Bereich von 30 bis 130, bevorzugt im Bereich von 45 bis 130, weiter bevorzugt im Bereich von 60 bis 130, insbesondere im Bereich von 90 bis 130 und insbesondere im Bereich von 95 bis 120 liegt.

38. Antimikrobielle Mischung nach Anspruch 1, **dadurch gekennzeichnet, dass** es sich bei der organischen Säureverbindung um Dehydroessigsäure oder ein Salz davon handelt.

39. Mischung nach dem vorhergehenden Anspruch, **dadurch gekennzeichnet, dass** das Dehydroessigsäuresalz aus Alkalimetallsalzen ausgewählt ist und vorzugsweise das Natriumsalz ist.

40. Antimikrobielle Mischung nach einem der Ansprüche 38 und 39, **dadurch gekennzeichnet, dass** sie Natriumdehydroacetat enthält.

41. Mischung nach einem der Ansprüche 38 bis 40, **dadurch gekennzeichnet, dass** sie 4-(3-Ethoxy-4-hydroxyphenyl)butan-2-on und Dehydroessigsäure oder ein Salz davon in solchen Mengen enthält, dass das Gewichtsverhältnis von 4-(3-Ethoxy-4-hydroxyphenyl)butan-2-on zu Dehydroessigsäure oder einem Salz davon im Bereich von 4 bis 60, vorzugsweise von 5 bis 50, liegt.

42. Mischung nach Anspruch 40, **dadurch gekennzeichnet, dass** sie ein Gewichtsverhältnis von 4-(3-Ethoxy-4-hydroxyphenyl)butan-2-on zu Natriumdehydroacetat im Bereich von 10 bis 60, vorzugsweise im Bereich von 15 bis 50, aufweist.

**43.** Mischung nach Anspruch 40, **dadurch gekennzeichnet, dass** sie ein Gewichtsverhältnis von 4-(3-Ethoxy-4-hydroxyphenyl)butan-2-on zu Natriumdehydroacetat im Bereich von 4 bis 40, vorzugsweise im Bereich von 5 bis 30, aufweist.

**44.** Zusammensetzung, die in einem physiologisch unbedenklichen Medium eine antimikrobielle Mischung nach einem der Ansprüche 1 bis 43 umfasst.

**45.** Zusammensetzung nach dem vorhergehenden Anspruch, **dadurch gekennzeichnet, dass** sie mindestens einen zusätzlichen Inhaltsstoff umfasst, der aus Wasser, Ölen, Polyolen mit 2 bis 10 Kohlenstoffatomen, Geliermitteln, Tensiden, filmbildenden Polymeren, Farbmitteln, Duftstoffen, Füllstoffen, UV-Filtersubstanzen, Pflanzenextrakten, kosmetischen und dermatologischen Wirkstoffen und Salzen ausgewählt ist.

**46.** Zusammensetzung nach einem der Ansprüche 44 und 45, **dadurch gekennzeichnet, dass** das 4-(3-Ethoxy-4-hydroxyphenyl)butan-2-on in einem Gehalt im Bereich von 0,01 bis 5 Gew.-%, bezogen auf das Gesamtgewicht der Zusammensetzung, vorzugsweise im Bereich von 0,01 bis 3 Gew.-% und bevorzugt im Bereich von 0,01 bis 2,5 Gew.-% vorliegt.

**47.** Verwendung einer antimikrobiellen Mischung nach einem der Ansprüche 1 bis 43 zur Konservierung einer Zusammensetzung, die ein physiologisch unbedenkliches Medium umfasst.

## Revendications

**1.** Mélange antimicrobien comprenant de la 4-(3-éthoxy-4-hydroxyphényl)butan-2-one et un composé de type acide organique choisi parmi :

i) un sel de l'acide benzoïque ;
ii) l'acide sorbique ou l'un de ses sels ;
iii) le 4-hydroxybenzoate de méthyle ou le 4-hydroxybenzoate de propyle ;
iv) l'acide n-octanoyl-5-salicylique ;
v) un acide hydroxamique, ou l'un de ses sels, de formule (I) :

R-C(=O)-NH-OH (I)

dans laquelle R représente un radical alkyle en $C_5$ à $C_{11}$, linéaire ou ramifié, saturé ou insaturé ;
vi) l'acide dehydroacétique ou l'un de ses sels.

**2.** Mélange selon la revendication précédente, **caractérisé en ce que** le composé de type acide organique est un sel de l'acide benzoïque.

**3.** Mélange selon la revendication précédente, **caractérisé en ce que** le sel d'acide benzoïque est choisi parmi les sels de métal alcalin, les sels de métal alcalinoterreux, le sel de monoéthanolamine, le sel d'ammonium.

**4.** Mélange selon l'une ou l'autre des revendications 2 et 3, **caractérisé en ce que** le sel d'acide benzoïque est le sel de sodium.

**5.** Mélange selon l'une des revendications 2 à 4, **caractérisé en ce qu'**il comprend de la 4-(3-éthoxy-4-hydroxyphényl)butan-2-one et de l'acide benzoïque ou l'un de ses sels en quantités telles que le rapport pondéral 4-(3-éthoxy-4-hydroxyphényl)butan-2-one / sel d'acide benzoïque va de 0,1 à 3, de préférence va de 0,1 à 1,5, préférentiellement va de 0,2 à 1,5 et plus préférentiellement va de 0,2 à 1,2.

**6.** Mélange antimicrobien selon la revendication 1, **caractérisé en ce que** le composé de type acide organique est l'acide sorbique ou l'un de ses sels.

**7.** Mélange selon la revendication précédente, **caractérisé en ce que** le sel d'acide sorbique est choisi parmi les sels de métal alcalin, les sels de métal alcalinoterreux, le sel de triéthanolamine, et de préférence est le sel de potassium.

**8.** Mélange selon l'une des revendications 6 et 7, **caractérisé en ce qu'**il comprend de la 4-(3-éthoxy-4-hydroxyphényl)butan-2-one et de l'acide sorbique ou l'un de ses sels en quantités telles que le rapport pondéral 4-(3-éthoxy-4-hydroxyphényl)butan-2-one / acide sorbique ou l'un de ses sels va de 0,1 à 2,5, de préférence va de 0,1 à 1,5, préférentiellement allant de 0,2 à 1,5 et plus préférentiellement va de 0,2 à 1,2.

**9.** Mélange antimicrobien selon l'une des revendication 6 à 8, **caractérisé en ce que** le mélange antimicrobien comprend de l'acide sorbique.

**10.** Mélange antimicrobien selon la revendication précédente, **caractérisé en ce qu'**il a un rapport pondéral 4-(3-éthoxy-4-hydroxyphényl)butan-2-one / acide sorbique allant de 0,1 à 1,5, et de préférence allant de 0,2 à 1,2.

**11.** Mélange antimicrobien selon la revendication 9, **caractérisé en ce qu'**il a un rapport pondéral 4-(3-éthoxy-4-hydroxyphényl)butan-2-one / acide sorbique allant de 0,1 à 1,5, de préférence allant de 0,4 à 1,2.

**12.** Mélange antimicrobien selon la revendication 9, **caractérisé en ce qu'**il a un rapport pondéral 4-(3-éthoxy-4-hydroxyphényl)butan-2-one / acide sorbique allant de 0,1 à 0,8, de préférence allant de 0,2 à 0,6.

**13.** Mélange antimicrobien selon la revendication 9, **caractérisé en ce qu'**il a un rapport pondéral 4-(3-éthoxy-4-hydroxyphényl)butan-2-one / acide sorbique allant de 0,15 à 0,4, de préférence allant de 0,2 à 0,3.

**14.** Mélange antimicrobien selon l'une des revendication 6 à 8, **caractérisé en ce que** le mélange antimicrobien comprend du sorbate de potassium.

**15.** Mélange antimicrobien selon la revendication précédente, **caractérisé en ce qu'**il a un rapport pondéral 4-(3-éthoxy-4-hydroxyphényl)butan-2-one / sorbate de potassium allant de 0,1 à 1,5, de préférence de 0,1 à 1,2.

**16.** Mélange antimicrobien selon la revendication 14, **caractérisé en ce qu'**il a un rapport pondéral 4-(3-éthoxy-4-hydroxyphényl)butan-2-one / sorbate de potassium allant de 0,3 à 2,5, de préférence allant de 0,3 à 1,5.

**17.** Mélange antimicrobien selon la revendication 1, **caractérisé en ce que** le composé de type acide organique est un ester choisi parmi le 4-hydroxybenzoate de méthyle et le 4-hydroxybenzoate de propyle.

**18.** Mélange selon la revendication précédente, **caractérisé en ce qu'**il comprend de la 4-(3-éthoxy-4-hydroxyphényl)butan-2-one et ledit ester en quantités telles que le rapport pondéral 4-(3-éthoxy-4-hydroxyphényl)butan-2-one / ester va de 0,3 à 5, de préférence va de 0,4 à 4,5.

**19.** Mélange selon la revendication 17, **caractérisé en ce qu'**il a un rapport pondéral 4-(3-éthoxy-4-hydroxyphényl)butan-2-one / ester allant de 0,1 à 1,5, de préférence allant de 0,2 à 1,5, préférentiellement allant de 0,4 à 1,2.

**20.** Mélange antimicrobien selon l'une des revendications 17 à 19, **caractérisé en ce que** l'ester est le 4-hydroxybenzoate de méthyle.

**21.** Mélange selon la revendication précédente, **caractérisé en ce qu'**il a un rapport pondéral 4-(3-éthoxy-4-hydroxyphényl)butan-2-one / 4-hydroxybenzoate de méthyle allant de 0,4 à 3, de préférence allant de 0,4 à 2,2.

**22.** Mélange selon la revendication 20, **caractérisé en ce qu'**il a un rapport pondéral 4-(3-éthoxy-4-hydroxyphényl)butan-2-one / 4-hydroxybenzoate de méthyle allant de 0,1 à 0,8, et de préférence allant de 0,1 à 0, 6.

**23.** Mélange selon la revendication 20, **caractérisé en ce qu'**il a un rapport pondéral 4-(3-éthoxy-4-hydroxyphényl)butan-2-one / 4-hydroxybenzoate de méthyle allant de 0,1 à 1,5.

**24.** Mélange antimicrobien selon l'une des revendications 17 à 19, **caractérisé en ce que** l'ester est le 4-hydroxybenzoate de propyle.

**25.** Mélange selon la revendication 24, **caractérisé en ce qu'**il a un rapport pondéral 4-(3-éthoxy-4-hydroxyphényl)butan-2-one / 4-hydroxybenzoate de propyle allant de 0,3 à 1,5, de préférence allant de 0,4 à 1,2.

**26.** Mélange selon la revendication 24, **caractérisé en ce qu'**il a un rapport pondéral 4-(3-éthoxy-4-hydroxyphényl)butan-2-one / 4-hydroxybenzoate de propyle allant de 0,7 à 5, de préférence de 0,8 à 4,5.

**27.** Mélange antimicrobien selon la revendication 1, **caractérisé en ce que** le composé de type acide organique est l'acide n-octanoyl-5-salicylique.

**28.** Mélange antimicrobien selon la revendication précédente, **caractérisé en ce qu'**il comprend de la 4-(3-éthoxy-4-hydroxyphényl)butan-2-one et de l'acide n-octanoyl-5 salicylique en quantités telles que le rapport pondéral 4-(3-éthoxy-4-hydroxyphényl)butan-2-one / acide n-octanoyl-5 salicylique va de 0,5 à 60, de préférence va de 0,5 à 50, préférentiellement va de 0,5 à 45.

**29.** Mélange antimicrobien selon l'une ou l'autre des revendications 27 et 28, **caractérisé en ce qu'**il a un rapport pondéral 4-(3-éthoxy-4-hydroxyphényl)butan-2-one / acide n-octanoyl-5 salicylique allant de 3 à 12, de préférence allant 3 à 10.

**30.** Mélange antimicrobien selon l'une ou l'autre des revendications 27 et 28, **caractérisé en ce qu'**il a un rapport pondéral 4-(3-éthoxy-4-hydroxyphényl)butan-2-one / acide n-octanoyl-5 salicylique allant de 0,5 à 12, de préférence allant de 0,5 à 10 .

**31.** Mélange antimicrobien selon l'une ou l'autre des revendications 27 et 28, **caractérisé en ce qu'**il a un rapport pondéral 4-(3-éthoxy-4-hydroxyphényl)butan-2-one / acide n-octanoyl-5 salicylique allant de 7 à 60, de préférence allant de 8 à 50, et préférentiellement allant de 9 à 45.

**32.** Mélange antimicrobien selon la revendication 1, **caractérisé en ce que** le composé de type acide organique est un acide hydroxamique de formule (I).

**33.** Mélange selon la revendication précédente, **caractérisé en ce que** ledit acide hydroxamique est choisi parmi l'acide caprohydroxamique, l'acide caprylhydroxamique, l'acide caprihydroxamique et l'acide laurylhydroxamique ou leurs mélanges.

**34.** Mélange antimicrobien selon l'une ou l'autre des revendications 32 et 33, **caractérisé en ce que** l'acide hydroxamique est l'acide caprylhydroxamique.

**35.** Mélange antimicrobien selon l'une des revendications 32 à 34, **caractérisé en ce qu'**il comprend du 1,3-propanediol.

**36.** Mélange selon la revendication précédente, **caractérisé en ce que** le 1,3-propanediol est présent selon un rapport pondéral 1,3-propanediol / acide hydroxamique (I) allant de 5 à 20, de préférence allant de 8 à 17, et mieux encore allant de 10 à 15.

**37.** Mélange selon l'une des revendications 32 à 36, **caractérisé en ce qu'**il comprend de la 4-(3-éthoxy-4-hydroxyphényl)butan-2-one et l'acide hydroxamique (I) en quantités telles que le rapport pondéral 4-(3-éthoxy-4-hydroxyphényl)butan-2-one / acide hydroxamique (I) va de 4 à 150, de préférence va de 30 à 130, préférentiellement va de 45 à 130, plus préférentiellement va de 60 à 130, en particulier va de 90 à 130, et notamment va de 95 à 120.

**38.** Mélange antimicrobien selon la revendication 1, **caractérisé en ce que** le composé de type acide organique est l'acide dehydroacétique ou l'un de ses sels.

**39.** Mélange selon la revendication précédente, **caractérisé en ce que** le sel d'acide dehydroacétique est choisi parmi les sels de métal alcalin, et de préférence est le sel de sodium.

**40.** Mélange antimicrobien selon l'une ou l'autre des revendications 38 et 39, **caractérisé en ce qu'**il contient du dehydroacétate de sodium.

**41.** Mélange selon l'une des revendications 38 à 40, **caractérisé en ce qu'**il comprend de la 4-(3-éthoxy-4-hydroxyphényl)butan-2-one et de l'acide dehydroacétique ou l'un de ses sels en quantités telles que le rapport pondéral 4-(3-éthoxy-4-hydroxyphényl)butan-2-one / acide dehydroacétique ou l'un de ses sels va de 4 à 60, de préférence va de 5 à 50.

**42.** Mélange selon la revendication 40, **caractérisé en ce qu'**il a un rapport pondéral 4-(3-éthoxy-4-hydroxyphényl)butan-2-one / dehydroacétate de sodium allant de 10 à 60, de préférence allant de 15 à 50.

**43.** Mélange selon la revendication 40, **caractérisé en ce qu'**il a un rapport pondéral 4-(3-éthoxy-4-hydroxyphényl)butan-2-one / dehydroacétate de sodium allant de 4 à 40, de préférence allant de 5 à 30.

**44.** Composition comprenant, dans un milieu physiologiquement acceptable, un mélange antimicrobien selon l'une des revendications 1 à 43.

**45.** Composition selon la revendication précédente, **caractérisée en ce qu'**elle comprend au moins un ingrédient supplémentaire choisi parmi l'eau, les huiles, les polyols contenant de 2 à 10 atomes de carbone, les gélifiants, les tensioactifs, les polymères filmogènes, les matières colorantes, les parfums, les charges, les filtres UV, les extraits végétaux, les agents actifs cosmétiques et dermatologiques, et les sels.

**46.** Composition selon l'une ou l'autre des revendications 44 et 45, **caractérisée en ce que** la 4-(3-éthoxy-4-hydroxyphényl)butan-2-one est présente en une teneur allant de 0,01 % à 5 % en poids, par rapport au poids total de la composition, de préférence allant de 0,01 % à 3 % en poids, et préférentiellement allant de 0,01 à 2,5 % en poids.

**47.** Utilisation d'un mélange antimicrobien selon l'une quelconque des revendications 1 à 43 pour la conservation d'une composition comprenant un milieu physiologiquement acceptable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011039445 A
- WO 2009070736 A


### Non-patent literature cited in the description


- *CHEMICAL ABSTRACTS,* 78418-01-6
- **F.C. KULL ; P.C. EISMAN ; H.D. SYLWESTROWKA ; R.L. MAYER.** *Applied Microbiology,* 1961, vol. 9, 538-541